(19) Europäisches Patentamt
European Patent Office
Office européen des brevets

(11) **EP 4 175 297 A1**

(12) **EUROPEAN PATENT APPLICATION**
published in accordance with Art. 153(4) EPC

(43) Date of publication:
**03.05.2023 Bulletin 2023/18**

(51) International Patent Classification (IPC):
***H04N 19/154*** (2014.01)    ***H04N 17/00*** (2006.01)

(21) Application number: **21822704.9**

(52) Cooperative Patent Classification (CPC):
**H04N 17/00; H04N 19/154**

(22) Date of filing: **18.03.2021**

(86) International application number:
**PCT/CN2021/081532**

(87) International publication number:
**WO 2021/248966 (16.12.2021 Gazette 2021/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(72) Inventors:
• **YUAN, Hui**
  **Dongguan, Guangdong 523860 (CN)**
• **LIU, Qi**
  **Dongguan, Guangdong 523860 (CN)**
• **LI, Ming**
  **Dongguan, Guangdong 523860 (CN)**

(30) Priority: **10.06.2020   CN 202010525713**

(71) Applicant: **GUANGDONG OPPO MOBILE
TELECOMMUNICATIONS
CORP., LTD.
Dongguan, Guangdong 523860 (CN)**

(74) Representative: **Manitz Finsterwald
Patent- und Rechtsanwaltspartnerschaft mbB
Martin-Greif-Strasse 1
80336 München (DE)**

(54) **POINT CLOUD QUALITY ASSESSMENT METHOD, ENCODER, DECODER, AND STORAGE MEDIUM**

(57)   Disclosed in the embodiments of the present disclosure are a point cloud quality assessment method, an encoder, a decoder, and a storage medium. The method comprises: parsing a bitstream to acquire a feature parameter of a point cloud to be assessed; determining a model parameter of a quality assessment model; and according to the model parameter and the feature parameter of the point cloud, determining a subjective quality measurement value of the point cloud using the quality assessment model. In this way, using a quality assessment model to perform subjective quality assessment on a point cloud can not only simplify the computational complexity of subjective quality assessment, but also can improve the accuracy of subjective quality assessment.

FIG. 4

**Description**

CROSS REFERENCE TO RELATED APPLICATIONS

This application claims priority from Chinese Patent Application No. 202010525713.5, filed to the China National Intellectual Property Administration on June 10, 2020 and entitled "POINT CLOUD QUALITY ASSESSMENT METHOD, ENCODER, DECODER, AND STORAGE MEDIUM", the disclosure of which is hereby incorporated by reference in its entirety.

TECHNICAL FIELD

The present disclosure relates to the technical field of video image processing, and in particular, to a point cloud quality assessment method, an encoder, a decoder, and a storage medium.

BACKGROUND

In a Video-based Point Cloud Compression (V-PCC) encoder frame, a Point Cloud distortion measurement (PC_error) technology is a reference algorithm for measuring PC objective quality. The PC_error technology separately calculates geometry-based Peak Signal to Noise Ratio (PSNR) and color (or referred to as attribute)-based PSNR, so as to characterize the objective quality level of geometry and color.

In the current solutions in the related art, the geometry PSNR and the color PSNR for PCs are calculated independently. However, when a human eye visual system receives the PCs, the quality distortion of the geometry and the color is acquired simultaneously and commonly affects the final human eye visual experience. As a result, the solutions in the related art cannot accurately reflect the PC quality of human eye subjectivity.

SUMMARY

The present disclosure provides a point cloud quality assessment method, an encoder, a decoder, and a storage medium, that not only simplify the computational complexity of subjective quality assessment, but also improve the accuracy of subjective quality assessment.

In order to achieve the above objective, the technical solutions of the present disclosure are implemented as follows.

According to a first aspect, an embodiment of the present disclosure provides a point cloud quality assessment method. The method is applied to a decoder or a media data processing device and includes the following operations.

A feature parameter of a Point Cloud (PC) to be assessed is obtained by parsing a bitstream.

A model parameter of a quality assessment model is determined.

According to the model parameter and the feature parameter of the PC to be accessed, a subjective quality measurement value of the PC to be accessed is determined by using the quality assessment model.

According to a second aspect, an embodiment of the present disclosure provides a point cloud quality assessment method. The method is applied to an encoder or a media data processing device and includes the following operations.

A feature parameter of the PC to be accessed is determined.

A model parameter of a quality assessment model is determined.

According to the model parameter and the feature parameter of the PC to be accessed, a subjective quality measurement value of the PC to be accessed is determined by using the quality assessment model.

According to a third aspect, an embodiment of the present disclosure provides a decoder. The decoder includes a parsing unit, a first determination unit and a first calculation unit.

The parsing unit is configured to parse a bitstream to acquire a feature parameter of the PC to be accessed.

The first determination unit is configured to determine a model parameter of a quality assessment model.

The first calculation unit is configured to, according to the model parameter and the feature parameter of the PC to be accessed, determine a subjective quality measurement value of the PC to be accessed using the quality assessment model.

According to a fourth aspect, an embodiment of the present disclosure provides a decoder. The decoder includes a first memory and a first processor.

The first memory is configured to store a computer program executable on the first processor.

The first processor is configured to execute the method described in the first aspect when running the computer program.

According to a fifth aspect, an embodiment of the present disclosure provides an encoder. The encoder includes a second determination unit and a second calculation unit.

The second determination unit is configured to determine a feature parameter of the PC to be accessed.

The second determination unit is further configured to determine a model parameter of a quality assessment model.

The second calculation unit is configured to, according to the model parameter and the feature parameter of the PC to be accessed, determine a subjective quality measurement value of the PC to be accessed using the quality assessment model.

According to a sixth aspect, an embodiment of the present disclosure provides an encoder. The encoder includes a second memory and a second processor.

The second memory is configured to store a computer program executable on the second processor.

The second processor is configured to execute the method described in the second aspect when running the computer program.

According to a seventh aspect, an embodiment of the present disclosure provides a computer storage medium. The computer storage medium stores a computer program. The computer program implements the method described in the first aspect when being executed by a first processor, or implements the method described in the second aspect when being executed by a second processor.

The embodiments of the present disclosure provide the point cloud quality assessment method, the encoder, the decoder, and the storage medium. After the feature parameter of the PC to be accessed are acquired, the model parameter of the quality assessment model is determined; and according to the model parameter and the feature parameter of the PC to be accessed, the subjective quality measurement value of the PC to be accessed is determined by using the quality assessment model. In this way, the use of the quality assessment model may improve the accuracy of subjective quality assessment. In addition, in the quality assessment model, by means of the technical solution of the present disclosure, only an original PC and feature values extracted from the original PC are required, and a distortion PC and a matching point pair of the original PC and the distortion PC are no longer required, thereby further simplifying the computational complexity of subjective quality assessment.

BRIEF DESCRIPTION OF THE DRAWINGS

FIG. 1 is a schematic position diagram of point-to-point distortion and point-to-plane distortion according to an embodiment of the present disclosure.

FIG. 2 is a schematic diagram of a framework of a V-PCC encoding process according to an embodiment of the present disclosure.

FIG. 3 is a schematic diagram of a framework of a V-PCC decoding process according to an embodiment of the present disclosure.

FIG. 4 is a schematic flowchart of a point cloud quality assessment method according to an embodiment of the present disclosure.

FIG. 5 is a schematic flowchart of another point cloud quality assessment method according to an embodiment of the present disclosure.

FIG. 6 is a schematic diagram of a relative position between a point reflecting Color Fluctuation in Geometric Distance (CFGD) and a near-neighbor point according to an embodiment of the present disclosure.

FIG. 7 is a schematic structural diagram of a non-empty voxel block reflecting Color Block Mean Variance (CBMV) according to an embodiment of the present disclosure.

FIG. 8 is a schematic flowchart of still another point cloud quality assessment method according to an embodiment of the present disclosure.

FIG. 9 is a schematic diagram of a composition structure of a decoder according to an embodiment of the present disclosure.

FIG. 10 is a schematic diagram of a hardware structure a decoder according to an embodiment of the present disclosure.

FIG. 11 is a schematic diagram of a composition structure of an encoder according to an embodiment of the present disclosure.

FIG. 12 is a schematic diagram of a hardware structure an encoder according to an embodiment of the present disclosure.

DETAILED DESCRIPTION

The technical solutions in the embodiments of this application are clearly and completely described below with reference to the drawings in the embodiments of this application. It is to be understood that, the specific embodiments described here are merely used for explaining related applications rather than limiting this application. In addition, it is further to be noted that, for ease of description, only the parts related to this application are shown in the drawings.

It is to be understood that, a point data set of product appearance surfaces obtained by means of a measuring instrument in a reverse engineering may be called a Point Cloud (PC). Generally, the number of points obtained by using a three-dimensional coordinate measuring machine is less, and the distance between the points is relatively large, so that the points may be called a sparse PC; while a PC obtained by using a three-dimensional laser scanner or a photographic scanner is more in the number of points and denser, which may be called a dense PC. Herein, each point may include geometric information (for example, position information, that is, x, y and z coordinates) and attribute information (for example, color information, that is, R, G and B information), and the way of description is called PC.

Specifically, the solutions in the related art generally use a PC_error objective PC distortion calculation technology. The technology is a reference algorithm for measuring PC objective quality. Herein, the PC_error technology separately calculates a geometry-based PSNR and a color-based PSNR to characterize the objective quality level of geometry and color, which may be classified into the geometry-based PSNR based on point-to-point geometric distortion (D1), geometry-based PSNR based on point-to-plane geometric distortion (D2), and color-based PSNR. The above three aspects of PSNR calculation are described in detail below.

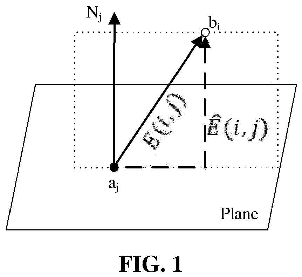

(1) For the geometry-based PSNR based on point-to-point geometric distortion (D1), the calculation model is to use the distance difference between geometric coordinates of a matching point pair of the reference PC and the distortion PC to calculate a geometric Mean Square Error (MSE), and then calculate, according to the MSE obtained by means of calculation, the geometry-based PSNR. As shown in FIG. 1, a specific implementation is that, "A" and "B" are respectively allowed to represent the reference PC and a compression PC; and an assessed compression error is eB and A, which is used to express the compression error of the PB "B" relative to the reference PC "A". Herein, each point bi in the compression PB "B" is shown as a point filled with white in FIG. 1; a corresponding point aj in the reference PC "A" is identified and shown as a point filled with black in FIG. 1; and the nearest neighbor is used to locate the corresponding point. In particular, a K Dimension Tree (KD tree) searching is used to execute nearest neighbor searching, so as to reduce computational complexity. An error vector *E(i,j)* is determined by associating the corresponding point aj in the reference PC "A" with the point bi in the compression PB "B". Herein, the length of the error vector is a point-to-point error, which is shown in the following formula.

$$e_{B,A}^{D1}(i) = \|E(i,j)\|_2^2 \qquad (1)$$

According to the point-to-point distance $e_{B,A}^{D1}(i)$ of NB $\boldsymbol{b_i} \in \boldsymbol{B}$ points in the compression PC "B", D1 of the whole PC may be defined as follows.

$$e_{B,A}^{D1} = \frac{1}{N_B} \sum_{\forall b_i \in B} e_{B,A}^{D1}(i) \qquad (2)$$

Similarly, $e_{A,B}^{D1}$ may also be calculated with reference to the above method, so as to obtain the final $D1 = \max\{e_{A,B}^{D1}, e_{B,A}^{D1}\}$.

That is to say, the PSNR value of point-to-plane geometric distortion (D1) is calculated as follows.

$$PSNR = 10 \log_{10}(\frac{3p^2}{MSE_{D1}}) \qquad (3)$$

Here, p is a peak constant that is pre-defined by a Moving Pictures Expert Group (MPEG) for each reference PC; and MSE is the MSE of point-to-point (D1). It is to be noted that, by using a test sequence 8iVFB-Long_dress as an example, p may be defined as 1023, but is not specifically limited.

(2) For the geometry-based PSNR based on point-to-plane geometric distortion (D2), the calculation model is to use the distance difference between geometric coordinates of a matching point pair of the reference PC and the distortion PC and a point product of a normal vector corresponding to the distance difference, to calculate the geometric MSE, and then calculate, according to the MSE obtained by means of calculation, the geometry-based PSNR. Still using FIG. 1 as an example, a specific implementation is that, the error vector $E(i,j)$ is projected in a normal direction Nj, so that a new error vector $\hat{E}(i,j)$ may be obtained. In this way, a calculation formula of a point-to-plane error is shown as follows.

$$e_{B,A}^{D2}(i) = \left\|\hat{E}(i,j)\right\|_2^2 = (E(i,j).N_j)^2 \qquad (4)$$

Further, the point-to-plane error (D2) of the whole PC may be defined as follows.

$$e_{B,A}^{D2} = \frac{1}{N_B}\sum\nolimits_{\forall b_i \in B} e_{B,A}^{D2}(i) \qquad (5)$$

Similarly, $e_{A,B}^{D2}$ may also be calculated with reference to the above method, so as to obtain the final $D2 = \max\{e_{A,B}^{D2}, e_{B,A}^{D2}\}$.

That is to say, the PSNR value of point-to-plane geometric distortion (D2) is calculated as follows.

$$PSNR = 10\log_{10}(\frac{3p^2}{MSE_{D2}}) \qquad (6)$$

Here, p is a peak constant that is pre-defined by a MPEG for each reference PC; and MSE is the MSE of point-to-plane (D2). Herein, by using a test sequence 8iVFB-Long_dress as an example, p may also be defined as 1023, but is not specifically limited.

(3) For the color-based PSNR, the calculation model is to use the color difference between matching point pairs of the reference PC and the distortion PC to calculate a color MSE, and then calculate, according to the MSE obtained by means of calculation, the color-based PSNR. Herein, for lossy attribute encoding, the value of the color-based PSNR is calculated as follows.

$$PSNR = 10\log_{10}(\frac{p^2}{MSE}) \qquad (7)$$

It is to be noted that, in a video image, a first color component, a second color component and the third color component are generally used to characterize the color attribute of each point in the current PC. In an RGB space, the three color components respectively are red (represented by R), green (represented by G) and blue (represented by B). In a YUV space, the three color components respectively are a luminance component (represented by Y), a first chrominance component (represented by U) and a second chrominance component (represented by V).

In this way, for the color attribute, the MSE of each component in the three color components may be calculated. Herein, an ITU-R BT.709 standard is used to perform conversion from the RGB space to the YUV space. Since the bit depth of each point for the color attribute of all test data is 8 bits, the peak p calculated by PSNR may be 255.

Therefore, the PSNR for the geometry and the color of PC is independently calculated in the solutions in the prior art. However, when a human eye visual system receives the PCs, the quality distortion of the geometry and the color is acquired simultaneously and commonly acts on the final visual experience. As a result, the solutions in the related art cannot accurately reflect the PC quality of human eye subjectivity.

In order to accurately predict the PC quality of human eye vision, an embodiment of the present disclosure provides a point cloud quality assessment method. After a feature parameter of a PC to be assessed is acquired, a model parameter of a quality assessment model are determined; and according to the model parameter and the feature parameter of the PC to be accessed, a subjective quality measurement value of the PC to be accessed is determined by using the quality assessment model. In this way, the use of the quality assessment model may improve the accuracy of subjective quality assessment. In addition, in the quality assessment model, by means of the technical solution of the present disclosure, only an original PC and feature values extracted from the original PC are required, and a distortion PC and a matching point pair of the original PC and the distortion PC are no longer required, thereby further simplifying the computational complexity of subjective quality assessment.

It is to be further noted that, in order to obtain desirable visual quality, enough dense PCs are required, which brings a large amount of PC data. Current, an MPEG proposes two technologies for PC compression. One is a Video-based Point Cloud Compression (V-PCC) technology, and the other is a Geometry-based Point Cloud Compression technology. In the embodiments of the present disclosure, the V-PCC technology is used as an example for detailed description.

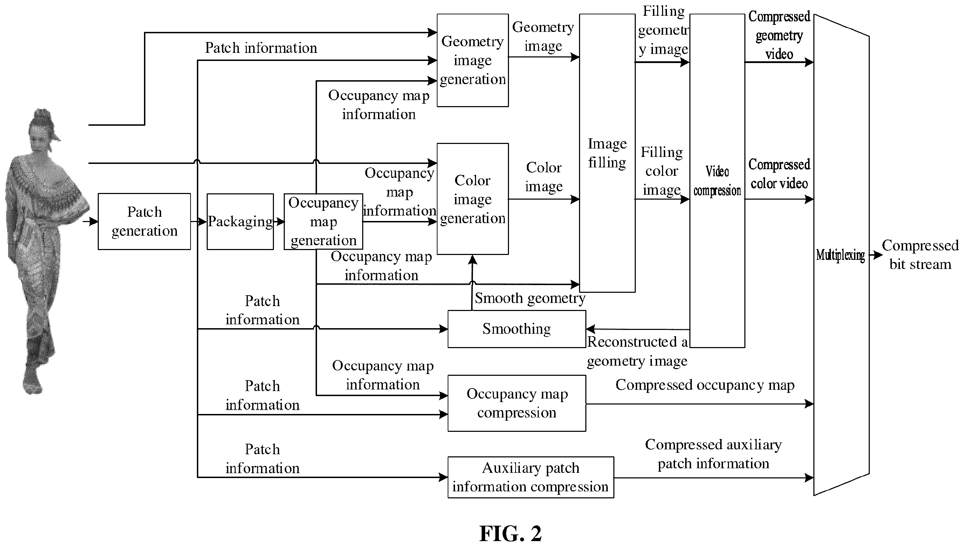

The main idea of the V-PCC is to use current video encoding and decoding to compress geometric information and color information of a dynamic PC. FIG. 2 is a schematic diagram of a framework of a V-PCC encoding process according to an embodiment of the present disclosure. In FIG. 2, the framework of the V-PCC encoding process is applied to a PC encoder. An input Three Dimensional Point Cloud (3DPC) is decomposed by means of a patch, so as to generate a set of patches. These patches may be independently mapped to a two-dimensional mesh by means of simple orthographic projection without suffering automatic occlusion and re-sampling PC geometry. Further, the extracted patches are mapped on the two-dimensional mesh by means of a packaging process, so as to generate an occupancy map. The occupancy map is composed of binary maps. The binary maps indicate that whether each unit of the mesh belongs to a blank space or the PC. Then, a geometry image and a color image are generated by using patch information and occupancy map information. After image filling is performed on the geometry image and the color image, a filled geometry image and a filled color image are obtained. Herein, the filling process is intended to fill the blank space between the patches, so as to attempt to generate a segmented smooth image that may be more suitable for video encoding. A smoothing process is intended to alleviate potential discontinuity at a patch edge due to compression distortion. A geometric reconstruction process of the PC uses the occupancy map information to detect non-empty pixels in the geometry image. A current video encoder, such as H.265/High Efficiency Video Coding (HEVC), is used to performed video compression, so as to obtain a compressed geometry video and a compressed color video. In addition, the occupancy map and auxiliary patch information are also respectively compressed, so as to obtain the compressed occupancy map and the compressed auxiliary patch information; and then the compressed information are multiplexed together, so as to generate a compressed bit stream of the final PC V-PCC.

That is to say, the basic principle of the framework of the V-PCC encoding process shown in FIG. 2 is to use the video encoder used for PC compression. An input three-dimensional PC is implemented by decomposing each PC patch in a three-dimensional PC sequence into a set of patches. These patches are independently mapped into the two-dimensional mesh composed of uniform blocks Then, the mapping is used to correspondingly store the geometric information and the color information as a geometry image and a color image. Then the current video encoder, such as the H.265/HEVC, is used to separately compress a geometry image sequence and a color image sequence corresponding to the dynamic PC. Finally, the geometry video, the color video and metadata (the occupancy map, auxiliary patch/block information) are used to reconstruct a dynamic three-dimensional PC. The bit stream of the compressed three-dimensional PC may be composed of the geometric information and the color information. For a given platform, the size of each portion is controlled by quantization parameters, and the quantization parameters may receive a large number of values. In addition, distortion is introduced during quantization, thereby affecting reconstruction quality.

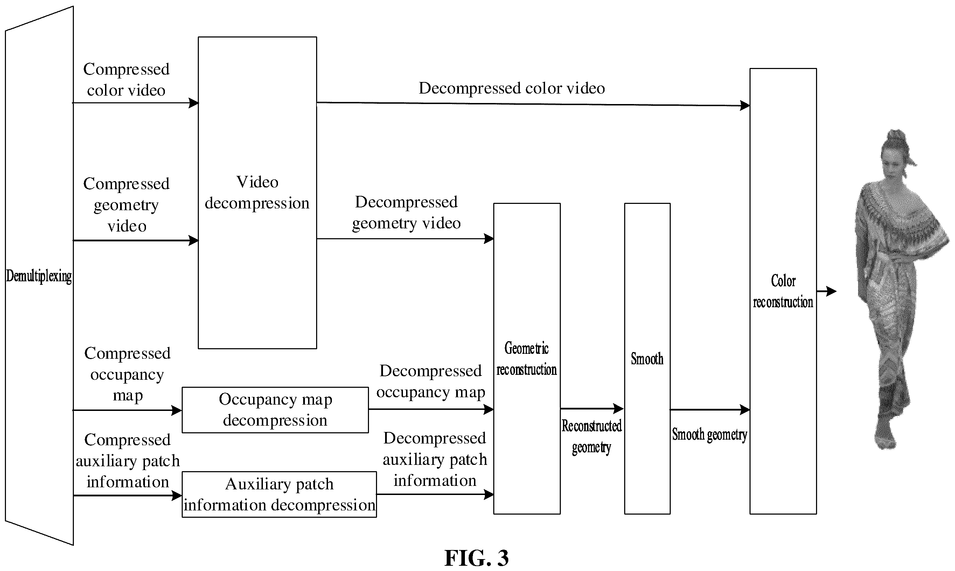

FIG. 3 is a schematic diagram of a framework of a V-PCC decoding process according to an embodiment of the present disclosure. In FIG. 3, the framework of the V-PCC decoding process is applied to a PC decoder. After acquiring the compressed bit stream, the PC decoder first separates the compressed bit stream into the compressed geometry video, the compressed color video, the compressed occupancy map and the compressed auxiliary patch information by means of demultiplexing, and then performs video decompression on the compressed geometry video and the compressed color video, so as to obtain the decompressed geometry video and the decompressed color video. Occupancy map decompression is performed on the compressed occupancy map, so as to obtain the decompressed occupancy map. Auxiliary patch information decompression is performed on the compressed auxiliary patch information, so as to obtain the decompressed auxiliary patch information. By means of successively performing geometric reconstruction, smoothing processing and color reconstruction, a three-dimensional PC inputted by the PC encoder can be restored.

Herein, the point cloud quality assessment method provided in the embodiments of the present disclosure may not only be applicable to the PC encoder, but also be applicable to the PC decoder, or even be applicable to the PC encoder and the PC decoder simultaneously. In this way, if a desirable prediction effect can be achieved in the PC encoder by means of the point cloud quality assessment method provided in the embodiments of the present disclosure, correspondingly, a desirable prediction effect can be also be achieved in the PC decoder.

Based on this, the technical solutions of the present disclosure are further described in detail below with reference to the drawings and embodiments. Before detailed description, it is to be noted that "first", "second", "third", and the like mentioned throughout the specification are only for distinguishing different features and do not limit priorities, sequences, magnitude relationships, and the like.

An embodiment of the present disclosure provides a point cloud quality assessment method. The method is applied to a PC decoder, which may be referred to as a decoder for short. Functions implemented by the method may be implemented by calling a computer program by means of a first processor in the decoder. Definitely, the computer program may be saved in the first processor. It can be seen that the decoder includes at least the first processor and a first memory.

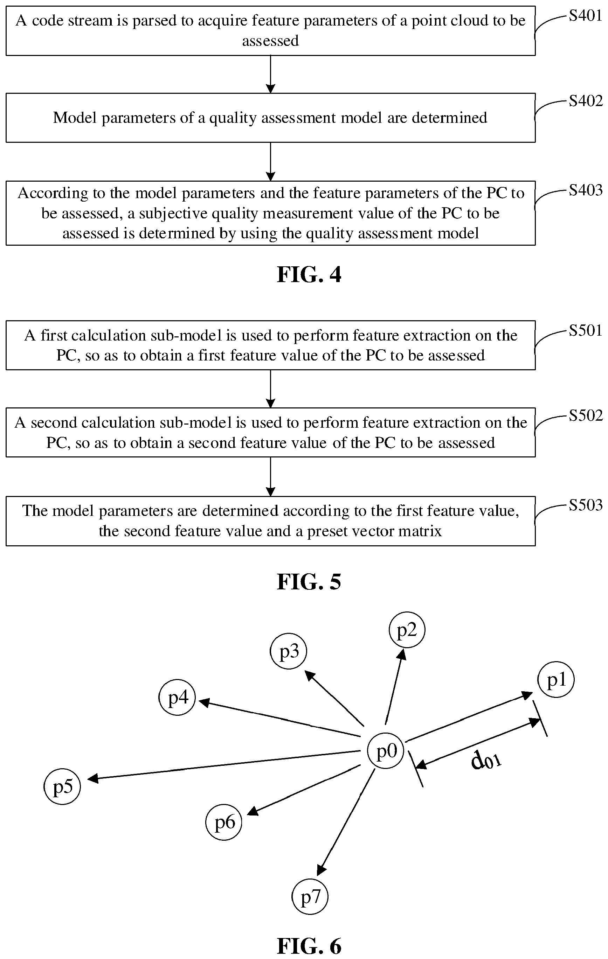

FIG. 4 is a schematic flowchart of a point cloud quality assessment method according to an embodiment of the present disclosure. As shown in FIG. 4, the method may include the following steps.

At S401, a bitstream is parsed to acquire a feature parameter of a Point Cloud (PC) to be assessed.

It is to be noted that, the point cloud quality assessment method may be applied to the decoder or a media data processing device. In a practical application, such as the media data processing device that occurs in a network for network optimization and quality assessment, for example, a Content Delivery Network (CDN), this embodiment of the present disclosure is not limited to playback devices that are used by conventional user sides and include the decoders. It may also be other devices including the decoders. No limitations are constituted herein.

It is to be further noted that, in the PC, the point may be all or part of the points in the PC. These points are relatively concentrated in space.

In some embodiments, the feature parameter of the PC to be accessed may include a quantization parameter of the PC to be accessed. The quantization parameter may include a geometric quantization parameter and a color quantization parameter of the PC to be accessed.

Herein, the geometric quantization parameter may be represented by QSg, which is used to indicate the quantization step value of a geometry video sequence; and the color quantization parameter may be represented by QSc, which is used to indicate the quantization step value of a color/attribute video sequence.

In the embodiments of the present invention, in regardless of the geometric quantization parameter or the color quantization parameter, an encoder side is determined according to an encoding parameter. As long as the encoding parameter is determined, the geometric quantization parameter and the color quantization parameter can be obtained, and the two parameters are written into the bitstream. In this way, the two parameters can be obtained by parsing the bitstream by means of the decoder, so as to subsequently assess the subjective quality of the PC to be accessed.

At S402, a model parameter of a quality assessment model is determined.

In the embodiments of the present disclosure, in order to accurately predict the PC quality of human eye vision, the distortion PCs of different levels that generated by the high-quality original PC may be first used. A Double Stimulus Impairment Scale (DSIS) subjective test method is used to construct a comprehensive and effective PC subjective quality test data set. Then, a simple and effective PC subjective quality assessment model is provided based on the data set, which may be referred to as the quality assessment model. Herein, the quality assessment model may represent that the subjective quality of the PC to be accessed is assessed according to the model parameter.

That is to say, the subjective quality test data set is required to be established first. In some embodiments, the operation of establishing the subjective quality test data set may include the following operations.

At least one reference PC is acquired.

Each of the at least one reference PC is compressed by using different values of the quantization parameters, so as to obtain a plurality of distortion PCs corresponding to each reference PC.

The subjective quality test data set is obtained based on the at least one reference PC and the respective observation data of the plurality of distortion PCs.

Exemplarily, 16 high-quality original PCs (that is, the reference PCs) are selected from a waterloo point cloud data set; and PC content may include fruits, vegetables, dessert, and the like. These reference PCs are compressed by using a Version 7 test module of the V-PCC, so as to acquire the distortion PCs. For each reference PC, by means of setting 5 geometric quantization parameters (for example, 26, 32, 38, 44 and 50) and 5 color quantization parameters (for example, 26, 32, 38, 44 and 50), a total of 25 levels of the distortion PCs are generated. In order to display the three-dimensional PC and the two-dimensional video as complete as possible, a horizontal circle and a vertical circle with radii being 5000 are used as a virtual camera path, of which centers of the circles are located at the geometric center of an object. A viewpoint is generated by rotating every two degrees on these circles around the reference PCs and the distortion PCs, so that 360 image frames may be generated for each PC. Then, segments of the distortion PCs and segments of the reference PCs thereof are horizontally connected to a 10-second video sequence for demonstration. 30 testers (15 males and 15 females) sit in front of a screen at a distance of about 2 times the height of the screen. A training session is first performed. Each level of the distortion PCs is observed in advance, so as to learn the PC quality of the PCs at each level from poor to good. Then, a formal test session is performed. The test session uses a DSIS method for subjective testing. The levels of the segments of the original reference PC and the distortion PCs are shown on the screen simultaneously. The observers assess the degree of distortion by means of comparing the difference between the above two, and give Mean Opinion Score (MOS) within a range from 0 to 100. Herein, the higher MOS means better subjective quality. The observers need to do observation for 2 h in total and test 400 pieces of data. There are 4 test sessions, and the observers rest for 5 minutes during every 2 consecutive test sessions. Finally, the 400 pieces of test data of the 30 observers are collected; and the average MOS of the observers is used as the final MOS of each observation data. Therefore, the subjective quality test data set of the PC can be obtained, and data in the data set is used as a reference standard (ground truth) for subsequently establishing the quality assessment model.

In this way, after the subjective quality test data set is established in advance, the quality assessment model may be constructed according to the subjective quality test data set. Assuming that a variable (100-MOS) is defined as the compensation value of the MOS, which is represented by $MOS^c$, the PC subjective quality assessment model may be obtained according to the test data in the subjective quality test data set. That is to say, the quality assessment model described in the embodiments of the present disclosure is shown as follows.

$$MOS^c = p1QS_g + p2QS_c + p3 \qquad (8)$$

Where, QSg and QSc respectively represent the geometric quantization parameter and the color quantization parameter, which are used to indicate the quantization step values of the geometry video sequence and the color video sequence; and p1, p2 and p3 represent the model parameters. In the subjective quality test data set, the accuracy rate of the fitted quality assessment model is shown in Table 1 below.

Table 1

| Point Cloud | p1 | p2 | p3 | SCC | RMSE |
|---|---|---|---|---|---|
| Bag | 0.223 | 0.183 | 6.342 | 0.949 | 4.954 |
| Banana | 0.247 | 0.08 | 23.601 | 0.902 | 6.336 |
| Biscuits | 0.143 | 0.156 | 12.072 | 0.927 | 4.387 |
| Cake | 0.241 | 0.125 | 10.489 | 0.938 | 5.153 |
| Cauliflower | 0.246 | 0.177 | 9.773 | 0.916 | 6.782 |
| Flowerpot | 0.291 | 0.075 | 16.212 | 0.877 | 8.339 |
| House | 0.22 | 0.269 | 3.597 | 0.93 | 7.059 |
| Litchi | 0.195 | 0.266 | 3.874 | 0.914 | 7.488 |
| Mushroom | 0.164 | 0.225 | 18.579 | 0.89 | 7.262 |
| Ping-pong_bat | 0.24 | 0.221 | 14.24 | 0.872 | 9.243 |
| Puer_tea | 0.124 | 0.297 | 11.921 | 0.948 | 5.568 |
| Pumpkin | 0.131 | 0.223 | 7.424 | 0.939 | 4.898 |
| Ship | 0.268 | 0.068 | 16.756 | 0.91 | 6.438 |
| Statue | 0.254 | 0.142 | 18.777 | 0.852 | 9.011 |
| Stone | 0.17 | 0.291 | 4.555 | 0.945 | 6.026 |
| Tool_box | 0.117 | 0.266 | 15.152 | 0.914 | 6.63 |
| Average | - | - | - | 0.914 | 6.598 |

In Table 1, p1, p2 and p3 are the model parameters that are fitted according to the subjective quality test data set; a Squared Correlation Coefficient (SCC) represents the correlation between an MOS value predicted according to the formula (8) and an MOS value actually tested, which is used to measure the deviation between the predicted MOS value and the actual MOS value; and a Root Mean Square Error (RMSE) represents an RMSE between the MOS value predicted according to the formula (8) and the MOS value actually tested, which is used to measure the deviation between the predicted MOS value and the actual MOS value.

If the SCC is closer to 1, it indicates that the deviation between the predicted MOS value and the actual MOS value is smaller; and in this case, the subjective quality observation effect is better when the prediction accuracy is higher. Otherwise, if the SCC deviates from 1, it indicates that the deviation between the predicted MOS value and the actual MOS value is larger; and in this case, the subjective quality observation effect is poorer when the prediction accuracy is lower. For the RMSE, if the value of the RMSE is smaller, it indicates that the deviation between the predicted MOS value and the actual MOS value is smaller; and in this case, the subjective quality observation effect is better when the prediction accuracy is higher. Otherwise, if the value of the RMSE is larger, it indicates that the deviation between the predicted MOS value and the actual MOS value is larger; and in this case, the subjective quality observation effect is poorer when the prediction accuracy is lower.

That is to say, Table 1 shows that, after the model parameters are fitted, an error between the MOS value predicted by the quality assessment model and the actual MOS value is used. It can be learned, from the content of Table 1, that, since the value of the SCC is basically relatively high, and the value of the RMSE is relatively low, it indicates that the accuracy of the MOS value predicted by using the formula (8) is very high, that is, the prediction error of the quality assessment model is small.

It is to be further noted that, the model parameters refer to model coefficients used for constructing the quality assessment model. Generally, there may be a plurality of model parameters, for example, a first model parameter (represented by p1), a second model parameter (represented by p2) and a third model parameter (represented by p3).

The determination of the model parameters may be described below by means of several implementations.

In a possible implementation, the model parameters may be determined by means of a fitting manner of the subjective quality test data set. The operation of determining the model parameter of the quality assessment model may include the following operations.

The subjective quality test data set is acquired.

Based on the subjective quality test data set, a model parameter function fitted. The model parameter function is used for reflecting a correspondence between the model parameter and the feature parameter.

According to the acquired feature parameter and the model parameter function, the model parameter is calculated.

It is to be noted that, the feature parameter uses QSg and QSc as examples. The subjective quality test data set is established in advance, and at least includes the plurality of distortion PCs, and the QSg, QSc and actual MOS value corresponding to each distortion PC. After the subjective quality test data set is acquired, the model parameter function may be fitted. In this case, the model parameter function reflects the correspondence between the model parameter and QSg and QSc. For certain said PC, after QSg and QSc are learned, the fitted model parameters may be obtained according to the model parameter function, which are p1, p2 and p3 shown in Table 1. Then, according to the quality assessment model shown in the formula (8), the MOS value of the PC can be obtained through prediction.

In another possible implementation, the model parameters do not necessarily need to be calculated on the spot, but may also be backup data obtained in advance. The operation of determining the model parameters of the quality assessment model may include the following operations.

The model parameters for said PC are selected from one or more sets of preset candidate quality assessment model parameters.

That is to say, one or more sets of candidate quality assessment model parameters are stored in the decoder or the media data processing device in advance. In this case, the model parameters for said PC may be directly selected from the one or more sets of preset candidate quality assessment model parameters, so as to obtain the quality assessment model.

Further, in order that the above quality assessment model can be used in the actual encoder or the decoder, the embodiments of the present disclosure further provide a prediction method for the model parameters based on features.

In still another possible implementation, the model parameters may be determined based on the features extracted by the PC. Specifically, the model parameters are mainly predicted by using two original PC features, including: a first feature being a feature about Color Fluctuation in Geometric Distance (CFGD), and a second feature being a feature about Color Block Mean Variance (CBMV), so that the model parameters are determined. As shown in FIG. 5, the method may include the following steps.

At S501, a first calculation sub-model is used to perform feature extraction on said PC, so as to obtain a first feature value of said PC.

It is to be noted that, the first calculation sub-model represents extraction, for said PC, of feature values related to the CFGD. Herein, an average value of the color intensity differences of N near-neighbor points in a domain in a unit distance may be used as the first feature value of said PC, that is, a CFGD value. N is an integer greater than 0. For example, N equals 7, but is not specifically limited.

For the extraction of the first feature value, in some embodiments, the step of using the first calculation sub-model to perform feature extraction on said PC, so as to obtain the first feature value of said PC may include the following operations.

The first feature value corresponding to one or more points in said PC is calculated.

Weighted mean calculation is performed on the first feature value corresponding to one or more points, and the obtained weighted mean is determined as the first feature value of said PC.

Further, the operation of calculating the first feature value corresponding to one or more points in said PC may include the following operations.

For a current point in said PC, a near-neighbor point set associated with the current point is determined. The near-neighbor point set includes at least one near-neighbor point.

For the near-neighbor point set, the color intensity difference between the current point and the at least one near-neighbor point in a unit distance is calculated, so as to obtain the color intensity difference in at least one unit distance.

A weighted mean of the color intensity difference in the at least one unit distance is calculated, to obtain the first feature value corresponding to the current point.

Further, the operation of calculating the color intensity difference between the current point and the at least one near-neighbor point in the unit distance may include the following operations.

A first color intensity value of a first color component of the current point and a second color intensity value of a first color component of the at least one near-neighbor point are acquired.

An absolute value of the difference between the first color intensity value of the current point and the second color intensity value of the at least one near-neighbor point is calculated, so as to obtain the color intensity difference between the current point and the at least one near-neighbor point.

According to the color intensity difference between the current point and the at least one near-neighbor point and a distance value between the current point and the at least one near-neighbor point, the color intensity difference between the current point and the at least one near-neighbor point in the unit distance is obtained.

It is to be noted that, in the embodiments of the present disclosure, for the data of said PC, for example, the first color intensity value of the current point and the first color intensity value of the near-neighbor point, on a decoder side, these data may all be obtained by means of parsing the bitstream or decoding the bitstream.

It is to be further noted that, for the weighted mean, the weighted value may be the same or different. Insofar as the same weighted value, it may be regarded as averaging, that is, the average value of the weighted values belongs to a specific weighted mean.

That is to say, as shown in FIG. 6, p0 is a current point to be calculated; and p1, p2, ..., p7 are N points closest to p0. Herein, N equals 7. First the average value of the absolute color intensity differences between the current point to be calculated and the N near-neighbor points in an adjacent geometric Euclidean distance is calculated as the CFGD value corresponding to the current point to be calculated. Then, mean calculation is performed on the CFGD values corresponding to the plurality of points in the whole PC, and the obtained mean is determined as the CFGD value of the PC. Herein, a specific calculation formula of the CFGD of the whole PC is shown as follows.

$$\text{CFGD} = \frac{1}{T}\sum_{i \in P}\frac{1}{N}\sum_{p_j \in S}\frac{|C(p_i) - C(p_j)|}{d_{i,j}} \tag{9}$$

Where, $\boldsymbol{P}$ represents said PC; S represents a near-neighbor point set of the point $\boldsymbol{p_i}$; T represents the number of the points in the PC; and N represents the number of the near-neighbor points in the near-neighbor point set of the point $\boldsymbol{p_i}$. $\boldsymbol{C(p_i)}$ represents the value of the first color component in the color attribute of the point $p_i$; $\boldsymbol{C(p_j)}$ represents the value of the first color component in the color attribute of the point $\boldsymbol{p_j}$; $\mathbf{d_{i,j}}$ represents the distance between the point $\mathbf{p_i}$ and 点$\mathbf{p_j}$; and $\dfrac{|C(p_i) - C(p_j)|}{d_{i,j}}$ represents the absolute color intensity difference between the point $\boldsymbol{p_i}$ and the point $\boldsymbol{p_j}$ in the unit distance.

It is to be further noted that, the distance here may be the geometric Euclidean distance, or may be a distance obtained according to Morton code calculation, which is not limited in the embodiments of the present disclosure. In addition, the first color component may be a Y component, but may also be expanded as a U component or a V component, which is also not limited in the embodiments of the present disclosure.

At S502, a second calculation sub-model is used to perform feature extraction on said PC, so as to obtain a second feature value of said PC.

It is to be noted that, the second calculation sub-model represents extraction, for said PC, of feature values related to the CBMV. Herein, the mean of the color standard deviation of all points in a non-empty voxel block may be used as the second feature value of the PC, that is, a CBMV value.

For the extraction of the second feature value, in some embodiments, the step of using the second calculation sub-model to perform feature extraction on said PC, so as to obtain the second feature value of said PC may include

EP 4 175 297 A1

the following operations.

The second feature values corresponding to one or more non-empty voxel blocks in said PC is calculated.

Weighted mean calculation is performed on the second feature values corresponding to one or more non-empty voxel blocks, and the obtained weighted mean is determined as the second feature value of said PC.

Further, the operation of second feature values corresponding to one or more non-empty voxel blocks in said PC may include the following operations.

For the current non-empty voxel block in said PC, a third color intensity value of a first color component of at least one point in the current non-empty voxel block is acquired.

The weighted mean of the third color intensity value of at least one point in the current non-empty voxel block is calculated, so as to obtain the color intensity average of the current non-empty voxel block.

For at least one point in the current non-empty voxel block, the third color intensity value and the color intensity average of the current non-empty voxel block are used to determine the color standard deviation of the at least one point.

The weighted mean of the color standard deviation of the at least one point is calculated, to obtain the second feature value corresponding to the non-empty voxel block.

It is to be noted that, the non-empty voxel block means that the voxel block at least includes at least one point. In addition, in the embodiments of the present disclosure, for the data of said PC, for example, the third color intensity value of at least one point in the current non-empty voxel block, on the decoder side, these data may also be obtained by means of parsing the bitstream or decoding the bitstream.

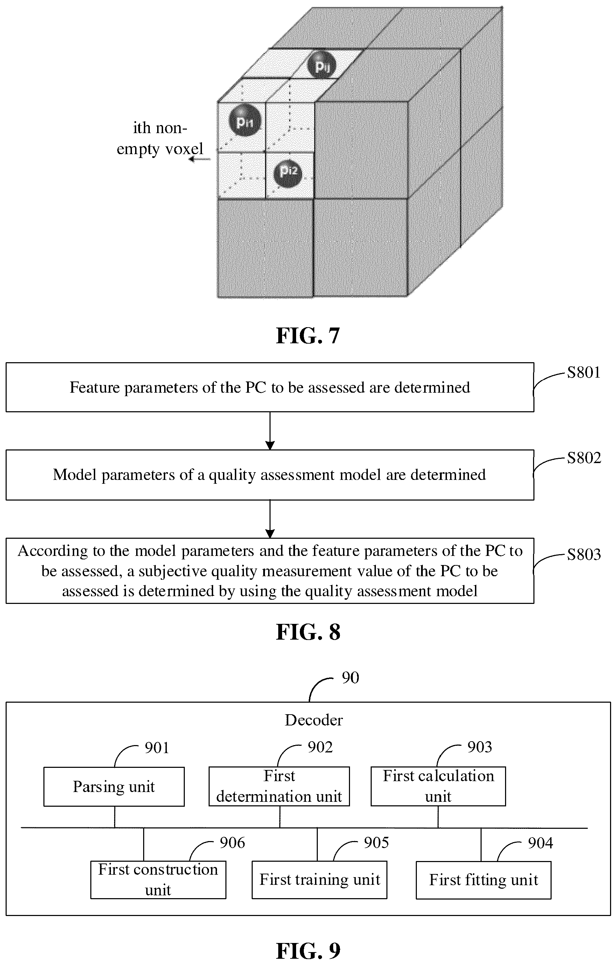

It is to be further noted that, as shown in FIG. 7, the whole PC is first divided into a plurality of H×W×L voxel blocks. Herein, H, W and L are integers greater than 0. For example, the PC is divided into 8×8×8 voxel blocks. A white box represents the ith non-empty voxel block; and $p_{i1}, p_{i2}, ..., p_{ij}$ represents all points in the non-empty voxel block. Then a specific calculation formula of the CBMV of the whole PC is shown as follows.

$$\text{CBMV} = \frac{1}{K}\sum_{i=1}^{K}\frac{1}{M}\sum_{j=1}^{M}\ \left(C\left(p_{ij}\right) - \mu\right)^{2} \tag{10}$$

Where, K represents the number of the non-empty voxel blocks (that is, the voxel blocks at least include the points in one PC) in the PC; M represents the number of all points in the ith non-empty voxel block; $C(p_{ij})$ represents the value of the first color component in the color attribute of the $p_{ij}$th point; and $\mu$ represents the average value of the first color components of all points in the non-empty voxel block. Herein, $(C(p_{ij}) - \mu)^{2}$ represents the color standard deviation of the $p_{ij}$th point in the ith non-empty voxel block.

In this way, the first feature value (that is, the CFGD value) of said PC may be calculated according to the formula (9); and the second feature value (that is, the CBMV value) of said PC may be calculated according to the formula (10).

At S503, the model parameter are determined according to the first feature value, the second feature value and a preset vector matrix.

It is to be noted that, before S503, a preset vector matrix is required to be acquired first. In some embodiments, the method may further include the following operations.

The subjective quality test data set is acquired.

The subjective quality test data set is trained to obtain the preset vector matrix.

Herein, the preset vector matrix is also obtained according to the subjective quality test data set. Specifically, after the subjective quality test data set is obtained, the preset vector matrix may be obtained by training the subjective quality test data set. Assuming that H represents the preset vector matrix, the value of the vector matrix may be obtained by means of training based on the subjective quality test data set.

$$H = \begin{bmatrix} 0.2235 & 0.1223 & 19.9724 \\ 0.0102 & 0.0096 & -2.3948 \\ -0.0222 & -0.0037 & 2.7712 \end{bmatrix} \tag{11}$$

It is to be further noted that, since the preset vector matrix is obtained by means of training based on a large amount of test data, different PCs may use the vector matrix shown in the formula (11).

In this way, after the preset vector matrix is obtained, the model parameter may be determined by simultaneously combining the above two feature values. In some embodiments, for S503, the operation of determining the model parameter according to the first feature value, the second feature value and the preset vector matrix may include the following operations.

A feature vector is constructed based on a preset constant value, the first feature value and the second feature value.

Multiplication is performed on the feature vector and the preset vector matrix to obtain a model parameter vector. The model parameter vector includes a first model parameter, a second model parameter and a third model parameter.

The first model parameter, the second model parameter and the third model parameter are determined as the model parameter.

Further, in some embodiments, the preset constant value is an integer. Generally, the preset constant value may equal 1, but is not specifically limited.

That is to say, the two feature values of CFGD and CBMV are extracted from said PC and then are respectively marked by using two components of f1 and f2. Herein, the first feature value f1, the second feature value f2 and the preset constant value 1 may for a $1 \times 3$ matrix, that is, a row vector, which is represented by a feature vector F, **F = [1 $f_1$ $f_2$]**. In addition, the model parameters p1, p2 and p3 may also form a $1 \times 3$ matrix, represented by a model parameter vector P, **P = [p1 p2 p3].** The preset vector matrix is H, and then the calculation mode of the model parameter vector P is shown as follows.

$$P = F \cdot H \qquad (12)$$

It is to be further noted that, assuming that a specific PC quality test data set is known, the model parameters may be first determined by means of fitting. Then, two feature values are extracted by using the formula (9) and the formula (10), so as to form the feature vector. In this way, the preset vector matrix can be obtained according to the formula (12).

Therefore, after the two feature values of CFGD and CBMV are extracted from said PC, since H is the preset vector matrix, the model parameters may be determined according to the formula (12), so that the MOS value of said PC can be calculated subsequently by using the quality assessment model.

At S403, according to the model parameters and the feature parameters of said PC, a subjective quality measurement value of said PC is determined by using the quality assessment model.

It is to be noted that, the quality assessment model may be regarded as a correspondence among the model parameters, the feature parameters and the subjective quality measurement value (that is, the MOS value). Since the feature parameters may be quantization parameters including $QS_g$ and $QS_c$, the quality assessment model may also be regarded as a correspondence among the model parameters, $QS_g$, $QS_c$ and the subjective quality measurement value, and the correspondence is shown in the formula (8). Therefore, after the model parameters, $QS_g$ and $QS_c$ are determined, the subjective quality measurement value of said PC can be determined according to the quality assessment model.

In some embodiments, the quality assessment model may also be of a more complex form. In this case, there four model parameters, which respectively are represented by a, b, c and d. The quality assessment model is shown as follows.

$$MOS^c = aQS_gQS_c + bQS_g + cQS_c + d \qquad (13)$$

Compared with the formula (8), a cross term of $QS_gQS_c$ is additionally added, and a model parameter is added synchronously, so that it is more complex in form. There may be an improvement in accuracy, but a greater difficulty is introduced in determining the model parameters. Since the more complex form is more difficult to apply in practice, the quality assessment model shown in the formula (8) is preferably selected in the embodiments of the present disclosure.

In addition, the quality assessment model provided in the embodiments of the present disclosure may not only be applied to the field of Rate Control (RC), but also be applied to the fields such as encoding parameter optimization, and data enhancement during PC data post-processing.

Specifically, (1) in the field of RC, a Rate-Distortion (R-D) model may be established by using the point cloud quality assessment method. The model includes a rate model and a distortion model, for example, which is used for distortion measurement. The applied calculation formula is shown as follows.

$$\min_{(QS_g,\ QS_c)} MOS^C(QS_g,\ QS_c)$$

$$s.t. \quad R_g(QS_g)+R_c(QS_g,\ QS_c) \leq R_T \qquad\qquad (14)$$

$$\min_{(QS_g,\ QS_c)} p1QS_g + p2QS_c + p3$$

$$s.t. \quad \gamma_g QS_g^{\theta_g} + \gamma_c QS_c^{\theta_g} \leq R_T \qquad\qquad (15)$$

Where, RT represents a target rate; and a MOSC result obtained by the formula (14) or the formula (15) is a minimum value. If the MOSC result is minimum, it indicates that the MOS value is maximum, that is, the subjective quality is the optimal. That is to say, if there are various rates for selection, in this case, the rate used for rate control is required to be less than or equal to the target rate, and the optimal subjective quality is required to be obtained simultaneously.

(2) In the field of encoding parameter optimization, the appropriate geometric quantization parameter ($QS_g$) and the color quantization parameter ($QS_c$) may be selected according to the quality assessment model shown in the formula (8), so as to obtain the required PC quality.

(3) In the field of data enhancement during PC data post-processing, after a certain data enhancement algorithm is used to process the PC, the PC quality predicted according to the quality assessment model may be compared with the required PC quality. When the predicted PC quality is not less than the required PC quality, the enhancement algorithm may stop the strategy for continuous enhancement. Alternatively, during the construction of the subjective quality test data set, and during the deep learning of a large amount of data, according to the quality assessment model, high-quality, medium-quality and low-quality test sequences may be selected as target data of the PC quality for enhancement, so as to obtain the required PC quality.

In addition, after the quality assessment model provided in the embodiments of the present disclosure obtains the subjective quality measurement value, the subjective quality measurement value may also be used for network optimization of the decoder side.

(1) For the media data processing device in the network, a network parameter can be optimized according to the subjective quality measurement value. For example, the priority, routing table, and the like of a transmission unit including the PC bitstream data are adjusted.

(2) For a playback device of a user side, for example, the subjective quality measurement value (or a mapping value of the subjective quality measurement value) may be fed back to the media data processing device in the network; and then the media data processing device performs network optimization on a transmission network according to the subjective quality measurement value fed back by a user.

(3) For the playback device of a user side, for example, a post-processing unit parameter of the playback device may be adjusted according to the subjective quality measurement value (or the mapping value of the subjective quality measurement value), and then enhancement is performed on the PC obtained after the bitstream is decoded (for example, for post-processing filtering, refer to an image/video post-processing process).

In conclusion, in the embodiments of the present disclosure, in order to obtain the more effective quality assessment model, a comprehensive and effective PC subjective test data set is established based on a current V-PCC encoder. A more accurate and simple quality assessment model is further constructed on the data set. In order to cause the quality assessment model to be widely applied in the practical application, two feature values of the CFGD and the CBMV may also be extracted from the original PC, and form the feature vector F with the preset constant value 1. Therefore, the model parameters may be predicted by using $\mathbf{P = F \cdot H}$ shown in the formula (12).

In the embodiments of the present disclosure, according to the quality assessment model shown in the formula (8), a test is performed on the test sequence of the PC subjective test data set. A Pearson Linear Correlation Coefficient (PLCC) is used for measuring whether two data sets are on one line, that is, used for measuring a linear relationship between fixed distance variables. A Spearman Rank-order Correlation Coefficient (SRCC) is used for reflecting the closeness of the association between two sets of variables, which also called a "grade difference method". That is to say, in the embodiments of the present disclosure, the PLCC and the SRCC are both used for reflecting the consistency between the MOS value predicted according to the quality assessment model and the actual MOS value.

Herein, according to the PC_error technology used by the V-PCC in the solutions in the related art, the PSNR of the Y component and the PLCC and the SRCC of the MOS value may be only 0.3956 and 0.3926. Based on the quality assessment model shown in the formula (8), the PLCC and SRCC data have respectively reach 0.9167 and 0.9174, as shown in Table 2. The data clearly shows that the accuracy of the subjective quality assessment is improved according to the solutions of the present disclosure. In addition, when the PC_error technology in the solutions in the related art calculates the PSNR of the Y component, the original PC and the encoded/decoded distortion PC are required to be used, so that the quantity required for the PC is large. The quality assessment model provided in the present disclosure only needs the original PC and the two feature values extracted from the original PC, which no long needs the distortion PC and the matching point pair of the original PC and the distortion PC, thereby simplifying the computational complexity of subjective quality assessment.

Table 2

| Model Type | Model | PLCC | SRCC | RMSE |
|---|---|---|---|---|
| FR | PSNRY | 0.3956 | 0.3926 | 20.2058 |
| RR | proposed algorithm | 0.9167 | 0.9174 | 8.7933 |

Where, FR is a Full Reference (FR) method; and RR represents a Reduced Reference (RR) method. Herein, the FR is the method used by the solutions in the related art; and the RR is the method used in the embodiments of the present disclosure. From Table 2, it is apparently learned that, the PLCC and the SRCC in the embodiments of the present disclosure are much higher than the PLCC and the SRCC in the solutions in the related art; and the RMSE in the embodiments of the present disclosure is much lower than the RMSE in the solutions in the related art. Therefore, it indicates that the accuracy of the subjective quality assessment is high.

An embodiment of the present disclosure provides a point cloud quality assessment method. The method is applied to the decoder or the media data processing device. By means of parsing the bitstream, the feature parameters of said PC are acquired; the model parameters of the quality assessment model are determined; and according to the model parameters and the feature parameters of said PC, the subjective quality measurement value of said PC is determined by using the quality assessment model. In this way, the use of the quality assessment model may improve the accuracy of subjective quality assessment. In addition, in the quality assessment model, by means of the technical solution of the present disclosure, only an original PC and feature values extracted from the original PC are required, and a distortion PC and a matching point pair of the original PC and the distortion PC are no longer required, thereby further simplifying the computational complexity of subjective quality assessment.

An embodiment of the present disclosure provides a point cloud quality assessment method. The method is applied to a PC encoder, that is, the encoder. Functions implemented by the method may be implemented by calling a computer program by means of a second processor in the encoder. Definitely, the computer program may be saved in the second processor. It can be seen that the encoder includes at least the second processor and a second memory.

FIG. 8 is a schematic flowchart of still another point cloud quality assessment method according to an embodiment of the present disclosure. As shown in FIG. 8, the method may include the following steps.

At S801, a feature parameter of said PC is determined.

It is to be noted that, the point cloud quality assessment method may be applied to the encoder or a media data processing device. In a practical application, such as the media data processing device that occurs in a network for network optimization and quality assessment, for example, a CDN, this embodiment of the present disclosure is not limited to playback devices that are used by conventional user sides and include the encoders. It may also be other devices including the encoders. No limitations are constituted herein.

It is to be further noted that, in the PC, the point may be all or part of the points in the PC. These points are relatively concentrated in space.

In some embodiments, the feature parameter of said PC may include quantization parameter of said PC. The quantization parameter may include a geometric quantization parameter and a color quantization parameter of said PC.

Herein, the geometric quantization parameter may be represented by QSg, which is used to indicate the quantization step value of a geometry video sequence; and the color quantization parameter may be represented by QSc, which is used to indicate the quantization step value of a color/attribute video sequence.

In addition, in regardless of the geometric quantization parameter or the color quantization parameter, the encoder side is determined according to an encoding parameter. In some embodiments, for S801, the operation of determining a feature parameter of said PC may include the following operations.

A pre-coding parameter of said PC is acquired.

According to the pre-coding parameter and a preset lookup table, the feature parameter of said PC are determined. The preset lookup table is used for reflecting a correspondence between a coding parameter and the feature parameter.

Further, the operation of acquiring the pre-coding parameter of said PC may include the following operations.

Various prediction modes are used to perform pre-coding processing on the current block, so as to obtain a R-D cost value corresponding to each prediction mode. Different prediction modes correspond to different encoding parameters.

The minimum R-D cost value is selected from the plurality of obtained R-D cost values, and then the encoding parameter corresponding to the minimum R-D cost value is determined as the pre-coding parameter.

It is to be noted that, on the encoder side, for the determination of the pre-coding parameter, a simple decision-making strategy may be used, for example, the pre-coding parameter is determined according to a distortion value; or a complex decision-making strategy may also be used, for example, the pre-coding parameter is determined according to a result of Rate Distortion Optimization (RDO). No limitations are constituted in the embodiments of the present disclosure. Generally, an RDO mode may be used to determine the pre-coding parameter of the current block.

In this way, since the encoder stores the preset lookup table, the preset lookup table is used for reflecting a correspondence between a coding parameter and the feature parameter. The feature parameter uses QSg and QSc as examples, the preset lookup table may also be used for reflecting the correspondence between the encoding parameters and QSg and QS. Therefore, after the current pre-coding parameter is determined, the QSg and the QSc corresponding to the pre-coding parameter may be looked up from the preset lookup table. In this case, the looked-up QSg and QSc are the feature parameters of said PC, so as to subsequently assess the subjective quality of said PC.

It is to be further noted that, on the encoder side, the feature parameters (for example, QSg and QSc) are also required to be written into the bitstream, and then are transmitted to the decoder from the encoder, so that the feature parameters such as QSg and QSc are acquired subsequently on the decoder side by means of parsing the bitstream.

At S802, a model parameter of a quality assessment model is determined.

It is to be further noted that, the model parameter refer to a parameter used for constructing the quality assessment model. Generally, there may be a plurality of model parameters, for example, a first model parameter (represented by p1), a second model parameter (represented by p2) and a third model parameter (represented by p3).

The determination of the model parameter may be described below by means of several implementations.

In a possible implementation, the model parameter may be determined by means of a fitting manner of the subjective quality test data set. The operation of determining the model parameter of the quality assessment model may include the following operations.

The subjective quality test data set is acquired.

Based on the subjective quality test data set, a model parameter function fitted. The model parameter function is used for reflecting a correspondence between the model parameter and the feature parameter.

According to the acquired feature parameter and the model parameter function, the model parameter is calculated.

It is to be noted that, the feature parameter uses QSg and QSc as examples. The subjective quality test data set is established in advance, and at least includes the plurality of distortion PCs, and the QSg, QSc and actual MOS value corresponding to each distortion PC. After the subjective quality test data set is acquired, the model parameter function may be fitted. In this case, the model parameter function reflects the correspondence between the model parameter and QSg and QSc. For certain said PC, after QSg and QSc are learned, the fitted model parameter may be obtained according to the model parameter function, which are p1, p2 and p3 shown in Table 1. Then, according to the quality assessment model shown in the formula (8), the MOS value of the PC can be obtained through prediction.

In another possible implementation, the model parameter do not necessarily need to be calculated on the spot, but may also be backup data obtained in advance. The operation of determining the model parameter of the quality assessment model may include the following operations.

The model parameter for said PC are selected from one or more sets of preset candidate quality assessment model parameters.

That is to say, one or more sets of candidate quality assessment model parameters are stored in the decoder or the media data processing device in advance. In this case, the model parameter for said PC may be directly selected from the one or more sets of preset candidate quality assessment model parameters, so as to obtain the quality assessment model.

Further, in order that the above quality assessment model can be used in the actual encoder or the decoder, the embodiments of the present disclosure further provide a prediction method for the model parameter based on features.

In still another possible implementation, the model parameter may be determined based on the features extracted by the PC. The operation of determining the model parameter of the quality assessment model may include the following operations.

A first calculation sub-model is used to perform feature extraction on said PC, so as to obtain a first feature value of said PC.

A second calculation sub-model is used to perform feature extraction on said PC, so as to obtain a second feature value of said PC.

The model parameter is determined according to the first feature value, the second feature value and a preset vector matrix.

It is to be noted that, the first calculation sub-model represents extraction, for said PC, of feature values related to the CFGD. Herein, an average value of the color intensity differences of N near-neighbor points in a domain in a unit distance may be used as the first feature value of said PC, that is, a CFGD value. N is an integer greater than 0. For example, N equals 7, but is not specifically limited.

It is to be further noted that, the second calculation sub-model represents extraction, for said PC, of feature values related to the CBMV. Herein, the mean of the color standard deviation of all points in a non-empty voxel block may be used as the second feature value of the PC, that is, a CBMV value.

The process of extracting the two feature values is described in detail below.

For the extraction of the first feature value, in some embodiments, the step of using the first calculation sub-model to perform feature extraction on said PC, so as to obtain the first feature value of said PC may include the following operations.

The first feature value corresponding to one or more points in said PC is calculated.

Weighted mean calculation is performed on the first feature value corresponding to one or more points, and the obtained weighted mean is determined as the first feature value of said PC.

Further, the operation of calculating the first feature value corresponding to one or more points in said PC may include the following operations.

For a current point in said PC, a near-neighbor point set associated with the current point is determined. The near-neighbor point set includes at least one near-neighbor point.

For the near-neighbor point set, the color intensity difference between the current point and the at least one near-neighbor point in a unit distance is calculated, so as to obtain the color intensity difference in at least one unit distance.

A weighted mean of the color intensity difference in the at least one unit distance is calculated, to obtain the first feature value corresponding to the current point.

Further, the operation of calculating the color intensity difference between the current point and the at least one near-neighbor point in the unit distance may include the following operations.

A first color intensity value of a first color component of the current point and a second color intensity value of a first color component of the at least one near-neighbor point are acquired.

An absolute value of the difference between the first color intensity value of the current point and the second color intensity value of the at least one near-neighbor point is calculated, so as to obtain the color intensity difference between the current point and the at least one near-neighbor point.

According to the color intensity difference between the current point and the at least one near-neighbor point and a distance value between the current point and the at least one near-neighbor point, the color intensity difference between the current point and the at least one near-neighbor point in the unit distance is obtained.

It is to be noted that, in the embodiments of the present disclosure, for the data of said PC, for example, the first color intensity value of the current point and the first color intensity value of the near-neighbor point, on the encoder side, these data may all be obtained by means of data of said PC. In addition, these data are also required to be written into the bitstream, so as to be transmitted to the decoder from the encoder.

It is to be further noted that, for the weighted mean, the weighted value may be the same or different. Insofar as the same weighted value, it may be regarded as averaging, that is, the average value of the weighted values belongs to a specific weighted mean.

That is to say, as shown in FIG. 6, p0 is a current point to be calculated; and p1, p2, ..., p7 are N points closest to p0. Herein, N equals 7. First the average value of the absolute color intensity differences between the current point to be calculated and the N near-neighbor points in an adjacent geometric Euclidean distance is calculated as the CFGD value corresponding to the current point to be calculated. Then, mean calculation is performed on the CFGD values corresponding to the plurality of points in the whole PC, and the obtained mean is determined as the CFGD value of the PC. Herein, a specific calculation formula of the CFGD of the whole PC is shown in the above formula (9). For details, refer to the description of the decoder side.

For the extraction of the second feature value, in some embodiments, the step of using the second calculation sub-model to perform feature extraction on said PC, so as to obtain the second feature value of said PC may include the following operations.

The second feature values corresponding to one or more non-empty voxel blocks in said PC is calculated.

Weighted mean calculation is performed on the second feature values corresponding to one or more non-empty voxel blocks, and the obtained weighted mean is determined as the second feature value of said PC.

Further, the operation of second feature values corresponding to one or more non-empty voxel blocks in said PC may include the following operations.

For the current non-empty voxel block in said PC, a third color intensity value of a first color component of at least one point in the current non-empty voxel block is acquired.

The weighted mean of the third color intensity value of at least one point in the current non-empty voxel block is calculated, so as to obtain the color intensity average of the current non-empty voxel block.

For at least one point in the current non-empty voxel block, the third color intensity value and the color intensity average of the current non-empty voxel block are used to determine the color standard deviation of the at least one point.

The weighted mean of the color standard deviation of the at least one point is calculated, to obtain the second feature value corresponding to the non-empty voxel block.

It is to be noted that, the non-empty voxel block means that the voxel block at least includes at least one point. In addition, in the embodiments of the present disclosure, for the data of said PC, for example, the third color intensity value of at least one point in the current non-empty voxel block, on the encoder side, these data may all be obtained by means of data of said PC. In addition, these data are also required to be written into the bitstream, so as to be transmitted to the decoder from the encoder.

That is to say, as shown in FIG. 7, the whole PC is first divided into a plurality of $H \times W \times L$ voxel blocks. Herein, H, W and L are integers greater than 0. For example, the PC is divided into $8 \times 8 \times 8$ voxel blocks. A white box represents the ith non-empty voxel block; and $p_{i1}, p_{i2}, ..., p_{ij}$ represents all points in the non-empty voxel block. Then a specific calculation formula of the CBMV of the whole PC is shown in the above formula (10). For details, refer to the description of the decoder side.

In this way, the first feature value (that is, the CFGD value) of said PC may be calculated according to the formula (9); and the second feature value (that is, the CBMV value) of said PC may be calculated according to the formula (10).

It is to be noted that, before the model parameter is determined, a preset vector matrix is required to be acquired. In some embodiments, the method may further include the following operations.

The subjective quality test data set is acquired.

The subjective quality test data set is trained to obtain the preset vector matrix.

Herein, the preset vector matrix is also obtained according to the subjective quality test data set. Specifically, after the subjective quality test data set is obtained, the preset vector matrix may be obtained by training the subjective quality test data set. Assuming that H represents the preset vector matrix, the value of the vector matrix may be obtained by means of training based on the subjective quality test data set, which is shown in the above formula (11).

It is to be further noted that, since the preset vector matrix is obtained by means of training based on a large amount of test data, different PCs may use the vector matrix shown in the formula (11).

In this way, after the preset vector matrix is obtained, the model parameter may be determined by combining the above two feature values. In some embodiments, the operation of determining the model parameter according to the first feature value, the second feature value and the preset vector matrix may include the following operations.

A feature vector is constructed based on a preset constant value, the first feature value and the second feature value.

Multiplication is performed on the feature vector and the preset vector matrix to obtain a model parameter vector. The model parameter vector includes a first model parameter, a second model parameter and a third model parameter.

The first model parameter, the second model parameter and the third model parameter are determined as the model parameters.

Further, in some embodiments, the preset constant value is an integer. Generally, the preset constant value may equal 1, but is not specifically limited.

That is to say, the two feature values of CFGD and CBMV are extracted from said PC and then are respectively marked by using two components of f1 and f2. Herein, the first feature value f1, the second feature value f2 and the preset constant value 1 may for a $1 \times 3$ matrix, that is, a row vector, which is represented by a feature vector F, $\mathbf{F = [1\ f_1\ f_2]}$. In addition, the model parameters p1, p2 and p3 may also form a $1 \times 3$ matrix, represented by a model parameter vector P, $\mathbf{P = [p1\ p2\ p3]}$. The preset vector matrix is H, and then the calculation mode of the model parameter vector P is shown in the above formula (12).

Therefore, after the two feature values of CFGD and CBMV are extracted from said PC, since H is the preset vector matrix, the model parameters may be determined according to the formula (12), so that the MOS value of said PC can be calculated subsequently by using the quality assessment model.

At S803, according to the model parameter and the feature parameter of said PC, a subjective quality measurement value of said PC is determined by using the quality assessment model.

It is to be noted that, the quality assessment model may be regarded as a correspondence among the model parameters, the feature parameters and the subjective quality measurement value (that is, the MOS value). Since the feature parameters may be quantization parameters including $\mathbf{QS_g}$ and $\mathbf{QS_c}$, the quality assessment model may also be regarded as a correspondence among the model parameters, $\mathbf{QS_g}$, $\mathbf{QS_c}$ and the subjective quality measurement value, and the correspondence is shown in the formula (8). Therefore, after the model parameters, $\mathbf{QS_g}$ and $\mathbf{QS_c}$ are determined, the subjective quality measurement value of said PC can be determined according to the quality assessment model.

In addition, after the quality assessment model provided in the embodiments of the present disclosure obtains the subjective quality measurement value, the subjective quality measurement value may also be used for network optimization of the encoder side.

(1) The subjective quality measurement value (or the mapping value of the subjective quality measurement value) is transferred to an encoder optimization module; and the encoder optimization module determines the encoding parameters of the encoder according to the subjective quality measurement value, for example, an RDO process, a rate control process, and the like.

(2) For a PC bitstream transmitting side, the subjective quality measurement value may also be transmitted to the media data processing device in the network, so as to perform network optimization on the transmission network.

(3) The subjective quality measurement value may also be transmitted to the playback device of the user side; and then the playback device of the user side may compare a locally assessed value according to the subjective quality measurement value, so as to assess the transmission quality of the network, and then feeds back an assessment result to the media data processing device in the network for network optimization.

An embodiment of the present disclosure provides a point cloud quality assessment method. The method is applied to the encoder or the media data processing device. The feature parameter of said PC is acquired; the model parameter of the quality assessment model is determined; and according to the model parameter and the feature parameter of said PC, the subjective quality measurement value of said PC is determined by using the quality assessment model. In this way, the use of the quality assessment model may improve the accuracy of subjective quality assessment. In addition, in the quality assessment model, by means of the technical solution of the present disclosure, only an original PC and feature values extracted from the original PC are required, and a distortion PC and a matching point pair of the original PC and the distortion PC are no longer required, thereby further simplifying the computational complexity of subjective quality assessment.

Based on the same invention concept of the foregoing embodiments, FIG. 9 is a schematic diagram of a composition structure of a decoder 90 according to an embodiment of the present disclosure. As shown in FIG. 9, the decoder 90 may include a parsing unit 901, a first determination unit 902 and a first calculation unit 903.

The parsing unit 901 is configured to parse a bitstream to acquire a feature parameter of said PC.

The first determination unit 902 is configured to determine a model parameter of a quality assessment model.

The first calculation unit 903 is configured to, according to the model parameter and the feature parameter of said PC, determine a subjective quality measurement value of said PC using the quality assessment model.

In some embodiments, the feature parameter of said PC includes a quantization parameter of said PC. The quantization parameter include a geometric quantization parameter and a color quantization parameter of said PC.

In some embodiments, referring to FIG. 9, the decoder 90 may further include a first fitting unit 904. The first fitting unit is configured to: acquire a subjective quality test dataset; and based on the subjective quality test data set, fit a model parameter function. The model parameter function is used for reflecting a correspondence between the model parameter and the feature parameter.

The first calculation unit 903 is further configured to, according to the acquired feature parameter and the model parameter function, calculate the model parameter.

In some embodiments, the first determination unit 902 is further configured to select the model parameter for said PC from one or more sets of preset candidate quality assessment model parameters.

In some embodiments, the first calculation unit 903 is further configured to: use a first calculation sub-model to perform feature extraction on said PC, so as to obtain a first feature value of said PC; and use a second calculation sub-model to perform feature extraction on said PC, so as to obtain a second feature value of said PC.

The first determination unit 902 is further configured to determine the model parameter according to the first feature value, the second feature value and a preset vector matrix.

The first calculation sub-model represents extraction, for said PC, of feature values related to CFGD, and the second calculation sub-model represents extraction, for said PC, of feature values related to CBMV.

In some embodiments, the first calculation unit 903 is further configured to: calculate the first feature value corresponding to one or more points in said PC; and perform weighted mean calculation on the first feature value corresponding to one or more points, and determine the obtained weighted mean as the first feature value of said PC.

In some embodiments, the first determination unit 902 is further configured to, for a current point in said PC, determine a near-neighbor point set associated with the current point. The near-neighbor point set includes at least one near-neighbor point.

The first calculation unit 903 is further configured to: for the near-neighbor point set, calculate the color intensity difference between the current point and the at least one near-neighbor point in a unit distance, so as to obtain the color intensity difference in at least one unit distance; and calculate a weighted mean of the color intensity difference in the at least one unit distance, to obtain the first feature value corresponding to the current point.

In some embodiments, the first calculation unit 903 is further configured to: acquire a first color intensity value of a first color component of the current point and a second color intensity value of a first color component of the at least one near-neighbor point; and calculate an absolute value of the difference between the first color intensity value of the current point and the second color intensity value of the at least one near-neighbor point, so as to obtain the color intensity difference between the current point and the at least one near-neighbor point.

The first determination unit 902 is further configured to, according to the color intensity difference between the current point and the at least one near-neighbor point and a distance value between the current point and the at least one near-neighbor point, determine the color intensity difference between the current point and the at least one near-neighbor point in the unit distance.

In some embodiments, the first calculation unit 903 is further configured to: calculate the second feature values corresponding to one or more non-empty voxel blocks in said PC; and perform weighted mean calculation on the second feature values corresponding to one or more non-empty voxel blocks, and determine the obtained weighted mean as the second feature value of said PC.

In some embodiments, the first calculation unit 903 is further configured to: for the current non-empty voxel block in said PC, acquire a third color intensity value of a first color component of at least one point in the current non-empty voxel block; and calculate the weighted mean of the third color intensity value of at least one point in the current non-empty voxel block, so as to obtain the color intensity average of the current non-empty voxel block. The first calculation unit is further configured to: for at least one point in the current non-empty voxel block, use the third color intensity value and the color intensity average of the current non-empty voxel block to determine the color standard deviation of the at least one point; and calculate the weighted mean of the color standard deviation of the at least one point, to obtain the second feature value corresponding to the non-empty voxel block.

In some embodiments, referring to FIG. 9, the decoder 90 may further include a first training unit 905. The first training unit is configured to: acquire a subjective quality test dataset; and training the subjective quality test data set to obtain the preset vector matrix.

In some embodiments, the first determination unit 902 is further configured to select, from one or more sets of preset candidate vector matrices, the preset vector matrix for determining the model parameter.

In some embodiments, referring to FIG. 9, the decoder 90 may further include a first construction unit 906. The first construction unit is configured to construct a feature vector based on a preset constant value, the first feature value and the second feature value.

The first calculation unit 903 is further configured to perform multiplication on the feature vector and the preset vector matrix to obtain a model parameter vector. The model parameter vector includes a first model parameter, a second model parameter and a third model parameter.

The first determination unit 902 is further configured to determine the first model parameter, the second model parameter and the third model parameter as the model parameter.

In some embodiments, the preset constant value is an integer.

It is understandable that, in this embodiment, a "unit" may be a part of a circuit, a part of a processor, or a part of a program or software, or may be a module definitely, and may be modularized. In addition, the components in this embodiment may be integrated into one processing unit, or each unit may exist alone physically, or two or more than two units may be integrated into one unit. The above integrated unit can be implemented in the form of hardware, or can be implemented in the form of a software functional module.

When implemented in form of software function module and sold or used not as an independent product, the integrated unit may be stored in a computer-readable storage medium. Based on such an understanding, the technical solution of the embodiment substantially or parts making contributions to the conventional art or all or part of the technical solution may be embodied in form of software product, and the computer software product is stored in a storage medium, including a plurality of instructions configured to enable a computer device (which may be a personal computer, a server, a network device or the like) or a processor to execute all or part of the steps of the method in the embodiment. The storage medium includes: various media capable of storing program codes such as a U disk, a mobile Hard Disk Drive (HDD), a Read-Only Memory (ROM), a Random Access Memory (RAM), a magnetic disk or an optical disk.

Therefore, an embodiment of the present disclosure provides a computer storage medium, applied to a decoder 90. The computer storage medium stores a computer program. The computer program, when being executed by a first processor, implements the method described by the decoder side in the foregoing embodiments.

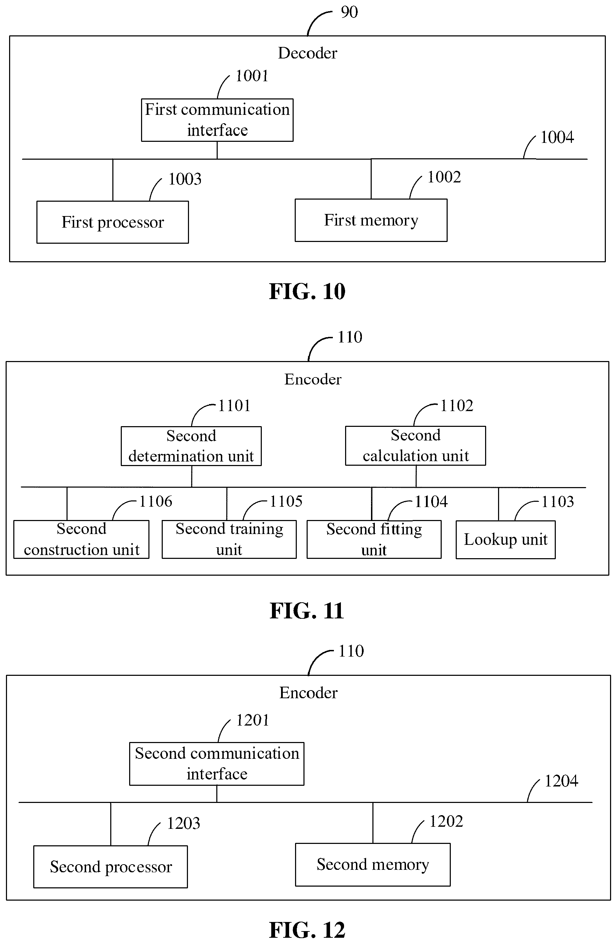

Based on the composition of the decoder 90 and the computer storage medium, FIG. 10 shows an example of a specific hardware structure of the decoder 90 according to an embodiment of the present disclosure. A first communication interface 1001, a first memory 1002 and a first processor 1003 may be included. The assemblies are coupled together by means of a first bus system 1004. It is understandable that, the first bus system 1004 is configured to achieve connection communication between these assemblies. In addition to including a data bus, the first bus system 1004 further includes a power bus, a control bus and a state signal bus. However, for the sake of clarity, the various buses are labeled as the first bus system 1004 in FIG. 10.

The first communication interface 1001 is configured to receive and transmit a signal when information is received and transmitted with other external network elements.

The first memory 1002 is configured to store a computer program executable on the first processor 1003.

The first processor 1003 is configured to execute the following when running the computer program.

A bitstream is parsed to acquire a feature parameter of a PC to be assessed.

A model parameter of a quality assessment model is determined.

According to the model parameter and the feature parameter of said PC, a subjective quality measurement value of said PC is determined by using the quality assessment model.

It is to be understood that the first memory 1002 in the embodiment of the present disclosure may be a volatile memory or a non-volatile memory, or may include both the volatile and non-volatile memories. The non-volatile memory may be an ROM, a PROM, an Erasable PROM (EPROM), an EEPROM or a flash memory. The volatile memory may be an RAM, and is used as an external high-speed cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DR RAM). The first memory 1002 of a system and method described in the present disclosure is intended to include, but not limited to, memories of these and any other proper types.

The first processor 1003 may be an integrated circuit chip and has a signal processing capacity. During implementation, each step of the method may be completed by an integrated logical circuit of hardware in the first processor 1003 or an instruction in a software form. The above first processor 1003 may be a general processor, a Digital Signal Processor (DSP), an Application Specific Integrated Circuit (ASIC), a Field-Programmable Gate Array (FPGA) or other programmable logic devices, discrete gate or transistor logic devices, and discrete hardware components. Each method, step and logical block diagram disclosed in the embodiments of the present disclosure may be implemented or executed. The general processors may be microprocessors or the processor may also be any conventional processors. In combination with the method disclosed in the embodiments of the present disclosure, the steps may be directly implemented by a hardware processor, or may be performed by a combination of hardware and software modules in the decoding processor. The software module may be located in a mature storage medium in the field such as a Random Access Memory (RAM), a flash memory, a Read-Only Memory (ROM), a Programmable ROM (PROM) or Electrically Erasable PROM (EEPROM), and a register. The storage medium is located in a first memory 1002, and the first processor 1003 reads information in the first memory 1002, and completes the steps of the method in combination with hardware.

It is understandable that, these embodiments described herein can be implemented with hardware, software, firmware, middleware, microcode, or a combination thereof. For hardware implementation, the processing unit may be implemented in one or more Application Specific Integrated Circuits (ASICs), a Digital Signal Processor (DSP), a Digital Signal Processing Device (DSPD), a Programmable Logic Device (PLD), a Field Programmable Gate Array (FPGA), a general processor, a controller, a microcontroller, a microprocessor, or other electronic units configured to execute functions described in the present disclosure or a combination thereof. For software implementation, the technologies described herein may be implemented by executing functional modules (for example, processes, functions and the like) described herein. A software code may be stored in the memory and be executed by the processor. The memory may be implemented in or outside the processor.

Optionally, as another embodiment, the first processor 1003 is further configured to, when running the computer program, execute the method described in any one of the foregoing embodiments.

An embodiment of the present disclosure provides a decoder. The decoder may include a parsing unit, a first determination unit and a first calculation unit. In the decoder, the use of the quality assessment model may improve the accuracy of subjective quality assessment. In addition, in the quality assessment model, by means of the technical solution of the present disclosure, only an original PC and feature values extracted from the original PC are required, and a distortion PC and a matching point pair of the original PC and the distortion PC are no longer required, thereby further simplifying the computational complexity of subjective quality assessment.

Based on the same invention concept of the foregoing embodiments, FIG. 11 is a schematic diagram of a composition structure of an encoder 110 according to an embodiment of the present disclosure. As shown in FIG. 11, the encoder 110 may include a second determination unit 1101 and a second calculation unit 1102.

The second determination unit 1101 is configured to determine a feature parameter of said PC.

The second determination unit 1101 is further configured to determine a model parameter of a quality assessment model.

The second calculation unit 1102 is configured to, according to the model parameter and the feature parameter of said PC, determine a subjective quality measurement value of said PC using the quality assessment model.

In some embodiments, referring to FIG. 11, the encoder 110 may further include a lookup unit 1103. The lookup unit is configured to: acquire a pre-coding parameter of said PC; and according to the pre-coding parameter and a preset lookup table, determine the feature parameter of said PC. The preset lookup table is used for reflecting a correspondence between a coding parameter and the feature parameter.

In some embodiments, the feature parameter of said PC includes a quantization parameter of said PC. The quantization parameter includes a geometric quantization parameter and a color quantization parameter of said PC.

In some embodiments, referring to FIG. 11, the encoder 110 may further include a second fitting unit 1104. The second fitting unit is configured to: acquire a subjective quality test dataset; and based on the subjective quality test data set, fit a model parameter function. The model parameter function is used for reflecting a correspondence between the model parameter and the feature parameter.

The second calculation unit 1102 is further configured to, according to the acquired feature parameter and the model parameter function, calculate the model parameter.

In some embodiments, the second determination unit 1101 is further configured to select the model parameter for said PC from one or more sets of preset candidate quality assessment model parameters.

In some embodiments, the second calculation unit 1102 is further configured to: use a first calculation sub-model to perform feature extraction on said PC, so as to obtain a first feature value of said PC; and use a second calculation sub-model to perform feature extraction on said PC, so as to obtain a second feature value of said PC.

The second determination unit 1101 is further configured to determine the model parameter according to the first feature value, the second feature value and a preset vector matrix.

The first calculation sub-model represents extraction, for said PC, of feature values related to CFGD, and the second calculation sub-model represents extraction, for said PC, of feature values related to CBMV.

In some embodiments, the second calculation unit 1102 is further configured to: calculate the first feature value corresponding to one or more points in said PC; and perform weighted mean calculation on the first feature value corresponding to one or more points, and determine the obtained weighted mean as the first feature value of said PC.

In some embodiments, the second determination unit 1101 is further configured to, for a current point in said PC, determine a near-neighbor point set associated with the current point. The near-neighbor point set includes at least one near-neighbor point.

The second calculation unit 1102 is further configured to: for the near-neighbor point set, calculate the color intensity difference between the current point and the at least one near-neighbor point in a unit distance, so as to obtain the color intensity difference in at least one unit distance; and calculate a weighted mean of the color intensity difference in the at least one unit distance, to obtain the first feature value corresponding to the current point.

In some embodiments, the second calculation unit 1102 is further configured to: acquire a first color intensity value of a first color component of the current point and a second color intensity value of a first color component of the at least one near-neighbor point; and calculate an absolute value of the difference between the first color intensity value of the current point and the second color intensity value of the at least one near-neighbor point, so as to obtain the color intensity difference between the current point and the at least one near-neighbor point.

The second determination unit 1101 is further configured to, according to the color intensity difference between the current point and the at least one near-neighbor point and a distance value between the current point and the at least one near-neighbor point, determine the color intensity difference between the current point and the at least one near-neighbor point in the unit distance.

In some embodiments, the second calculation unit 1102 is further configured to: calculate the second feature values corresponding to one or more non-empty voxel blocks in said PC; and perform weighted mean calculation on the second feature values corresponding to one or more non-empty voxel blocks, and determine the obtained weighted mean as the second feature value of said PC.

In some embodiments, the second calculation unit 1102 is further configured to: for the current non-empty voxel block in said PC, acquire a third color intensity value of a first color component of at least one point in the current non-empty voxel block; and calculate the weighted mean of the third color intensity value of at least one point in the current non-empty voxel block, so as to obtain the color intensity average of the current non-empty voxel block. The first calculation unit is further configured to: for at least one point in the current non-empty voxel block, use the third color intensity value and the color intensity average of the current non-empty voxel block to determine the color standard deviation of the at least one point; and calculate the weighted mean of the color standard deviation of the at least one point, to obtain the second feature value corresponding to the non-empty voxel block.

In some embodiments, referring to FIG. 11, the encoder 110 may further include a second training unit 1105. The second training unit is configured to: acquire a subjective quality test dataset; and training the subjective quality test data set to obtain the preset vector matrix.

In some embodiments, the second determination unit 1101 is further configured to: acquire a subjective quality test dataset; and training the subjective quality test data set to obtain the preset vector matrix.

In some embodiments, referring to FIG. 11, the encoder 110 may further include a second construction unit 1106. The second construction unit is configured to construct a feature vector based on a preset constant value, the first feature value and the second feature value.

The second calculation unit 1102 is further configured to perform multiplication on the feature vector and the preset vector matrix to obtain a model parameter vector. The model parameter vector includes a first model parameter, a second model parameter and a third model parameter.

The second determination unit 1101 is further configured to determine the first model parameter, the second model parameter and the third model parameter as the model parameter.

In some embodiments, the preset constant value is an integer.

It is understandable that, in this embodiment, a "unit" may be a part of a circuit, a part of a processor, or a part of a program or software, or may be a module definitely, and may be modularized. In addition, the components in this embodiment may be integrated into one processing unit, or each unit may exist alone physically, or two or more than two units may be integrated into one unit. The above integrated unit can be implemented in the form of hardware, or can be implemented in the form of a software functional module.

The integrated unit can be stored in a computer-readable storage medium if the unit is implemented in the form of a software function module and not sold or used as an independent product. Based on such understanding, an embodiment of the present disclosure provides a computer storage medium, applied to an encoder 110. The computer storage medium stores a computer program. The computer program, when being executed by a second processor, implements the method described by the encoder side in the foregoing embodiments.

Based on the composition of the encoder 110 and the computer storage medium, FIG. 12 shows an example of a specific hardware structure of the encoder 110 according to an embodiment of the present disclosure. A second communication interface 1201, a second memory 1202 and a second processor 1203 may be included. The assemblies are coupled together by means of a second bus system 1204. It is understandable that, the second bus system 1204 is configured to achieve connection communication between these assemblies. In addition to including a data bus, the second bus system 1204 further includes a power bus, a control bus and a state signal bus. However, for the sake of clarity, the various buses are labeled as the second bus system 1204 in FIG. 12.

The second communication interface 1201 is configured to receive and transmit a signal when information is received and transmitted with other external network elements.

The second memory 1202 is configured to store a computer program executable on the second processor 1203.

The second processor 1203 is configured to execute the following when running the computer program.

A feature parameter of said PC is determined.

A model parameter of a quality assessment model is determined.

According to the model parameter and the feature parameter of said PC, a subjective quality measurement value of said PC is determined by using the quality assessment model.

Optionally, as another embodiment, the second processor 1203 is further configured to, when running the computer program, execute the method described in any one of the foregoing embodiments.

It is understandable that, the hardware function of the second memory 1202 is similar to that of the first memory 1002, and the hardware function of the second processor 1203 is similar to that of the first processor 1003. Details are not described herein again.

An embodiment of the present disclosure provides an encoder. The encoder may include a second determination unit and a second calculation unit. In the encoder, the use of the quality assessment model may improve the accuracy of subjective quality assessment. In addition, in the quality assessment model, by means of the technical solution of the present disclosure, only an original PC and feature values extracted from the original PC are required, and a distortion PC and a matching point pair of the original PC and the distortion PC are no longer required, thereby further simplifying the computational complexity of subjective quality assessment.

It is to be noted that terms "include" and "comprise" or any other variant thereof is intended to cover nonexclusive inclusions herein, so that a process, method, object or apparatus including a series of components not only includes those components but also includes other components which are not clearly listed or further includes components intrinsic to the process, the method, the object or the apparatus. Under the condition of no more limitations, a component defined by the statement "including a/an....." does not exclude existence of the same other components in a process, method, object or apparatus including the component.

The serial numbers of the foregoing embodiments of the present disclosure are merely for description, and do not represent the superiority or inferiority of the embodiments.

The methods disclosed in several method embodiments provided by the present disclosure can be combined arbitrarily without conflict to obtain a new method embodiment.

The characteristics disclosed in several product embodiments provided in the present disclosure can be combined arbitrarily without conflict to obtain a new product embodiment.

The characteristics disclosed in several method or device embodiments provided in the present disclosure can be combined arbitrarily without conflict to obtain a new method embodiment or device embodiment.

The above is only the specific implementations of the present disclosure and not intended to limit the scope of protection of the present disclosure. Any variations or replacements apparent to those skilled in the art within the technical scope disclosed by the present disclosure shall fall within the scope of protection of the present disclosure. Therefore, the protection scope of the present disclosure shall be subject to the protection scope of the claims.

INDUSTRIAL APPLICABILITY

In the embodiment of the present disclosure, in regardless of the encoder or the decoder or even the media data processing device, the quality assessment model is fully used, so that the accuracy of subjective quality assessment can be improved. In addition, when the quality assessment model is used for performing subjective quality assessment of the PC, since only the original PC and the feature values extracted from the original PC are required to be used, the distortion PC and the matching point pair of the original PC and the distortion PC are no longer required, thereby further simplifying the computational complexity of subjective quality assessment.

**Claims**

1. A point cloud quality assessment method, applied to a decoder or a media data processing device and comprising:

   parsing a bitstream to acquire a feature parameter of a Point Cloud (PC) to be assessed;
   determining a model parameter of a quality assessment model; and
   determining, according to the model parameter and the feature parameter of the PC to be assessed, a subjective quality measurement value of the PC to be assessed by using the quality assessment model.

2. The method of claim 1, wherein the feature parameter of the PC to be accessed comprises a quantization parameter of the PC to be accessed; and the quantization parameter comprises a geometric quantization parameter and a color quantization parameter of the PC to be accessed.

3. The method of claim 1, wherein the determining a model parameter of a quality assessment model comprises:

   acquiring a subjective quality test data set;
   fitting a model parameter function based on the subjective quality test data set, wherein the model parameter function is used for reflecting a correspondence between the model parameter and the feature parameter; and
   calculating the model parameter according to the acquired feature parameter and the model parameter function.

4. The method of claim 1, wherein the determining a model parameter of a quality assessment model comprises:
   selecting the model parameter for the PC to be accessed from one or more sets of preset candidate quality assessment model parameters.

5. The method of claim 1, wherein the determining a model parameter of a quality assessment model comprises:

   obtaining a first feature value of the PC to be accessed by performing feature extraction on the PC to be accessed using a first calculation sub-model;
   obtaining a second feature value of the PC to be accessed by performing feature extraction on the PC to be accessed using a second calculation sub-model; and
   determining the model parameter according to the first feature value, the second feature value and a preset vector matrix, wherein
   the first calculation sub-model represents extracting feature values related to Color Fluctuation in Geometric Distance (CFGD) from the PC to be accessed, and the second calculation sub-model represents extracting feature values related to Color Block Mean Variance (CBMV) from the PC to be accessed.

6. The method of claim 5, wherein the obtaining first feature values of the PC to be accessed by performing feature extraction on the PC to be accessed using a first calculation sub-model comprises:

   calculating a first feature value corresponding to one or more points in the PC to be accessed; and
   performing weighted mean calculation on the first feature values corresponding to the one or more points and chaining a weighted mean as the first feature value of the PC to be accessed.

7. The method of claim 6, wherein the calculating the first feature values corresponding to one or more points in the PC to be accessed comprises:

   for a current point in the PC to be accessed, determining a near-neighbor point set associated with the current point, wherein the near-neighbor point set comprises at least one near-neighbor point;

for the near-neighbor point set, calculating a color intensity difference between the current point and the at least one near-neighbor point in a unit distance, to obtain the color intensity difference in at least one unit distance; and obtaining the first feature value corresponding to the current point by calculating a weighted mean of the color intensity difference in the at least one unit distance.

8. The method of claim 7, wherein the calculating a color intensity difference between the current point and the at least one near-neighbor point in a unit distance comprises:

acquiring a first color intensity value of a first color component of the current point and a second color intensity value of a first color component of the at least one near-neighbor point;
obtaining a color intensity difference between the current point and the at least one near-neighbor point by calculating an absolute value of a difference between the first color intensity value of the current point and the second color intensity value of the at least one near-neighbor point; and
determining the color intensity difference between the current point and the at least one near-neighbor point in the unit distance according to the color intensity difference between the current point and the at least one near-neighbor point and the distance value between the current point and the at least one near-neighbor point.

9. The method of claim 5, wherein the obtaining a second feature value of the PC to be accessed by performing feature extraction on the PC to be accessed using a second calculation sub-model comprises:

calculating second feature values corresponding to one or more non-empty voxel blocks in the PC to be accessed; and
performing weighted mean calculation on the second feature values corresponding to the one or more non-empty voxel blocks, and obtaining a weighted mean as the second feature value of the PC to be accessed.

10. The method of claim 9, wherein the calculating second feature values corresponding to one or more non-empty voxel blocks in the PC to be accessed comprises:

for the current non-empty voxel block in the PC to be accessed, acquiring a third color intensity value of a first color component of at least one point in the current non-empty voxel block;
obtaining the color intensity average of the current non-empty voxel block by calculating a weighted mean of the third color intensity value of at least one point in the current non-empty voxel block;
for at least one point in the current non-empty voxel block, determining the color standard deviation of the at least one point using the third color intensity value and the color intensity average of the current non-empty voxel block; and
obtaining the second feature value corresponding to the non-empty voxel block by calculating a weighted mean of color standard deviation of the at least one point.

11. The method of claim 5, further comprising:

acquiring a subjective quality test data set;
obtaining a preset vector matrix by training the subjective quality test data set.

12. The method of claim 5, further comprising:
selecting, from one or more sets of preset candidate vector matrices, a preset vector matrix for determining the model parameter.

13. The method of claim 5, wherein the determining the model parameter according to the first feature value, the second feature value and a preset vector matrix comprises:

constructing a feature vector based on a preset constant value, the first feature value and the second feature value;
obtaining a model parameter vector by performing multiplication on the feature vector and the preset vector matrix, wherein the model parameter vector comprises a first model parameter, a second model parameter and a third model parameter; and
determining the first model parameter, the second model parameter and the third model parameter as the model parameter.

**14.** The method of claim 13, wherein the preset constant value is an integer.

**15.** A point cloud quality assessment method, applied to an encoder or a media data processing device and comprising:

determining a feature parameter of a Point Cloud (PC) to be assessed;
determining a model parameter of a quality assessment model; and
determining, according to the model parameter and the feature parameter of the PC to be accessed, a subjective quality measurement value of the PC to be accessed using the quality assessment model.

**16.** The method of claim 15, wherein the determining a feature parameter of the PC to be accessed comprises:

acquiring a pre-coding parameter of the PC to be accessed; and
determining the feature parameter of the PC to be accessed according to the pre-coding parameter and a preset lookup table, wherein the preset lookup table is used for reflecting a correspondence between a coding parameter and the feature parameter.

**17.** The method of claim 15 or 16, the feature parameter of the PC to be accessed comprise a quantization parameter of the PC to be accessed; and the quantization parameter comprise a geometric quantization parameter and a color quantization parameter of the PC to be accessed.

**18.** The method of claim 15, wherein the determining a model parameter of a quality assessment model comprises:

acquiring a subjective quality test data set;
fitting a model parameter function based on the subjective quality test data set, wherein the model parameter function is used for reflecting a correspondence between the model parameter and the feature parameter; and
calculating the model parameter according to the acquired feature parameter and the model parameter function.

**19.** The method of claim 15, wherein the determining a model parameter of a quality assessment model comprises:
selecting the model parameter for the PC to be accessed from one or more sets of preset candidate quality assessment a model parameter.

**20.** The method of claim 15, wherein the determining a model parameter of a quality assessment model comprises:

obtaining a first feature value of the PC to be accessed by performing feature extraction on the PC to be accessed using a first calculation sub-model;
obtaining a second feature value of the PC to be accessed by performing feature extraction on the PC to be accessed using a second calculation sub-model; and
determining the model parameter according to the first feature value, the second feature value and a preset vector matrix, wherein
the first calculation sub-model represents extracting feature values related to Color Fluctuation in Geometric Distance (CFGD) from the PC to be accessed, and the second calculation sub-model represents extracting feature values related to Color Block Mean Variance (CBMV) from the PC to be accessed.

**21.** The method of claim 20, wherein the obtaining a first feature value of the PC to be accessed by performing feature extraction on the PC to be accessed using a first calculation sub-model comprises:

calculating first feature values corresponding to one or more points in the PC to be accessed; and
performing weighted mean calculation on the first feature values corresponding to one or more points, and obtaining a weighted mean as the first feature value of the PC to be accessed.

**22.** The method of claim 21, wherein the calculating the first feature value corresponding to one or more points in the PC to be accessed comprises:

for a current point in the PC to be accessed, determining a near-neighbor point set associated with the current point, wherein the near-neighbor point set comprises at least one near-neighbor point;
for the near-neighbor point set, calculating a color intensity difference between the current point and the at least one near-neighbor point in a unit distance to obtain a color intensity difference in at least one unit distance; and
obtaining the first feature value corresponding to the current point by calculating a weighted mean of the color intensity difference in the at least one unit distance.

23. The method of claim 22, wherein the calculating the color intensity difference between the current point and the at least one near-neighbor point in a unit distance comprises:

acquiring a first color intensity value of a first color component of the current point and a second color intensity value of a first color component of the at least one near-neighbor point;
obtaining a color intensity difference between the current point and the at least one near-neighbor point by calculating an absolute value of a difference between the first color intensity value of the current point and the second color intensity value of the at least one near-neighbor point; and
determining a color intensity difference between the current point and the at least one near-neighbor point in the unit distance according to the color intensity difference between the current point and the at least one near-neighbor point and a distance value between the current point and the at least one near-neighbor point.

24. The method of claim 20, wherein the obtaining a second feature value of the PC to be accessed by performing feature extraction on the PC to be accessed using a second calculation sub-model comprises:

calculating second feature values corresponding to one or more non-empty voxel blocks in the PC to be accessed; and
performing weighted mean calculation on the second feature values corresponding to one or more non-empty voxel blocks, and obtaining a weighted mean as the second feature value of the PC to be accessed.

25. The method of claim 24, wherein the calculating the second feature values corresponding to one or more non-empty voxel blocks in the PC to be accessed comprises:

for the current non-empty voxel block in the PC to be accessed, acquiring a third color intensity value of a first color component of at least one point in the current non-empty voxel block;
obtaining a color intensity average of the current non-empty voxel block by calculating a weighted mean of a third color intensity value of at least one point in the current non-empty voxel block;
for at least one point in the current non-empty voxel block, determining a color standard deviation of the at least one point by using the third color intensity value and the color intensity average of the current non-empty voxel block; and
obtaining the second feature value corresponding to the non-empty voxel block by calculating a weighted mean of the color standard deviation of the at least one point.

26. The method of claim 20, further comprising:

acquiring a subjective quality test data set;
obtaining a preset vector matrix by training the subjective quality test data set.

27. The method of claim 20, further comprising:
selecting, from one or more sets of preset candidate vector matrices, the preset vector matrix for determining the model parameter.

28. The method of claim 20, wherein the determining the model parameter according to the first feature value, the second feature value and a preset vector matrix comprises:

constructing a feature vector based on a preset constant value, the first feature value and the second feature value;
obtaining a model parameter vector performing multiplication on the feature vector and the preset vector matrix, wherein the model parameter vector comprises a first model parameter, a second model parameter and a third model parameter; and
determining the first model parameter, the second model parameter and the third model parameter as the model parameter.

29. The method of claim 28, wherein the preset constant value is an integer.

30. A decoder, comprising a parsing unit, a first determination unit and a first calculation unit, wherein

the parsing unit is configured to parse a bitstream to acquire a feature parameter of a Point Cloud (PC) to be assessed;

the first determination unit is configured to determine a model parameter of a quality assessment model; and

the first calculation unit is configured to, according to the model parameter and the feature parameter of the PC to be accessed, determine a subjective quality measurement value of the PC to be accessed using the quality assessment model.

31. A decoder, comprising a first memory and a first processor, wherein

the first memory is configured to store a computer program executable on the first processor; and

the first processor is configured to execute the method of any of claims 1 to 14 when running the computer program.

32. An encoder, comprising a second determination unit and a second calculation unit, wherein

the second determination unit is configured to determine a feature parameter of a Point Cloud (PC) to be assessed;

the second determination unit is further configured to determine a model parameter of a quality assessment model; and

the second calculation unit is configured to, according to the model parameter and the feature parameter of the PC to be accessed, determine a subjective quality measurement value of the PC to be accessed using the quality assessment model.

33. An encoder, comprising a second memory and a second processor, wherein

the second memory is configured to store a computer program executable on the second processor; and

the second processor is configured to execute the method of any of claims 15 to 29 when running the computer program.

34. A computer storage medium, storing a computer program, wherein the computer program implements the method of any of claims 1 to 14 when being executed by a first processor, or implements the method of any of claims 15 to 29 when being executed by a second processor.

**FIG. 1**

**FIG. 2**

EP 4 175 297 A1

**FIG. 3**

| A code stream is parsed to acquire feature parameters of a point cloud to be assessed | $\sim$S401 |

| Model parameters of a quality assessment model are determined | $\sim$S402 |

| According to the model parameters and the feature parameters of the PC to be assessed, a subjective quality measurement value of the PC to be assessed is determined by using the quality assessment model | $\sim$S403 |

**FIG. 4**

| A first calculation sub-model is used to perform feature extraction on the PC, so as to obtain a first feature value of the PC to be assessed | $\sim$S501 |

| A second calculation sub-model is used to perform feature extraction on the PC, so as to obtain a second feature value of the PC to be assessed | $\sim$S502 |

| The model parameters are determined according to the first feature value, the second feature value and a preset vector matrix | $\sim$S503 |

**FIG. 5**

**FIG. 6**

ith non-
empty voxel

**FIG. 7**

| | |
|---|---|
| Feature parameters of the PC to be assessed are determined | S801 |

↓

| | |
|---|---|
| Model parameters of a quality assessment model are determined | S802 |

↓

| | |
|---|---|
| According to the model parameters and the feature parameters of the PC to be assessed, a subjective quality measurement value of the PC to be assessed is determined by using the quality assessment model | S803 |

**FIG. 8**

90

Decoder

| 901 | 902 | 903 |
|---|---|---|
| Parsing unit | First determination unit | First calculation unit |

| 906 | 905 | 904 |
|---|---|---|
| First construction unit | First training unit | First fitting unit |

**FIG. 9**

90

Decoder

1001

First communication
interface

1004

1003

First processor

1002

First memory

**FIG. 10**

110

Encoder

1101

Second
determination unit

1102

Second
calculation unit

1106

1105

1104

1103

Second
construction unit

Second training
unit

Second fitting
unit

Lookup unit

**FIG. 11**

110

Encoder

1201

Second communication
interface

1204

1203

Second processor

1202

Second memory

**FIG. 12**

## INTERNATIONAL SEARCH REPORT

| | International application No. |
| --- | --- |
| | **PCT/CN2021/081532** |

| | |
| --- | --- |
| **A.** | **CLASSIFICATION OF SUBJECT MATTER** |
| | H04N 19/154(2014.01)i;  H04N 17/00(2006.01)i |

According to International Patent Classification (IPC) or to both national classification and IPC

| | |
| --- | --- |
| **B.** | **FIELDS SEARCHED** |

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI: 点云, 编码, 解码, 压缩, 质量, 失真, 评估, 评价, 评分, 测评, 检测, 特征, 参数, point, cloud, compression, PCC, quality, evaluation, assessment, test, detect+, subjective

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| PX | CN 111612891 A (BEIJING JINGDONG GANSHI TECHNOLOGY CO., LTD.) 01 September 2020 (2020-09-01)<br>description, paragraphs [0002]-[0146], and figures 1-8 | 1-4, 15-19, 30-34 |
| X | CN 110929779 A (TENCENT TECHNOLOGY SHENZHEN CO., LTD.) 27 March 2020 (2020-03-27)<br>description, paragraphs [0002]-[0179], and figures 1-10 | 1-4, 15-19, 30-34 |
| X | CN 110246112 A (XIAMEN UNIVERSITY) 17 September 2019 (2019-09-17)<br>description, paragraphs [0002]-[0100], and figures 1-4 | 1-4, 15-19, 30-34 |
| A | EP 3373583 A1 (THOMSON LICENSING) 12 September 2018 (2018-09-12)<br>entire document | 1-34 |

| | | |
| --- | --- | --- |
| ☐ Further documents are listed in the continuation of Box C. | ☑ See patent family annex. | |

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **18 May 2021** | **09 June 2021** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/081532**

| Patent document cited in search report | | | Publication date (day/month/year) | Patent family member(s) | | | Publication date (day/month/year) |
|---|---|---|---|---|---|---|---|
| CN | 111612891 | A | 01 September 2020 | None | | | |
| CN | 110929779 | A | 27 March 2020 | None | | | |
| CN | 110246112 | A | 17 September 2019 | None | | | |
| EP | 3373583 | A1 | 12 September 2018 | WO | 2018162406 | A1 | 13 September 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010525713